(19) Europäisches Patentamt
European Patent Office
Office européen des brevets

(11) Publication number: **0 256 303 A2**

(12) **EUROPEAN PATENT APPLICATION**

(21) Application number: 87110035.0

(22) Date of filing: 11.07.87

(51) Int. Cl.$^3$: C 09 K 19/20
C 07 C 69/92, C 07 C 69/773

(30) Priority: 23.06.87 US 61071
21.07.86 US 887619

(43) Date of publication of application:
24.02.88 Bulletin 88/8

(84) Designated Contracting States:
BE DE FR GB IT NL SE

(71) Applicant: POLAROID CORPORATION
549 Technology Square
Cambridge, Massachusetts 02139(US)

(72) Inventor: Cumming, William J.
5 Dayton Street
Chelmsford, MA 01863(US)

(72) Inventor: Gaudiana, R.A.
71 Turkey Hill Road
Merrimack, NH 03054(US)

(72) Inventor: McGowan, Cynthia
16 Country Club Road
Stoneham. MA 01280(US)

(72) Inventor: Minns, Richard A.
38 Sunset Road
Arlington, MA 02174(US)

(72) Inventor: Naiman, Alaric
19 Greenough Avenue
Cambridge, MA 02139(US)

(74) Representative: Reitzner, Bruno, Dr. et al,
Patentanwälte Dipl.-Ing. R. Splanemann Dr. B. Reitzner
Tal 13
D-8000 München 2(DE)

(54) **Liquid crystal compounds having fluorine-containing core.**

(57) Liquid crystal compounds exhibiting ferroelectric behavior and favorable spontaneous polarization values are disclosed and have the formula

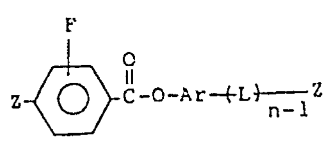

wherein Ar is p-phenylene or p,p'-biphenylene; L is a linking group selected from $-CH_2-$, -O-,

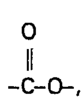, or 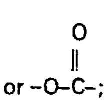;

n is an integer one or two; each of Z and Z' is alkyl, alkoxy, alkoxyalkyl or an optically active group containing an asymmetric center; at least one of Z and Z' being said optically active group containing an asymmetric center. Compounds exhibiting the chiral smectic C phase are particularly suited to application in a ferroelectric display device.

EP 0 256 303 A2

7331



# LIQUID CRYSTAL COMPOUNDS HAVING FLUORINE-CONTAINING CORE

## BACKGROUND OF THE INVENTION

This invention relates to certain liquid crystal compounds of the smectic type. More particularly, it relates to smectic liquid crystals which exhibit a ferroelectric, chiral smectic C phase and which find application in electrooptic display devices.

The utilization of the properties of a ferroelectric smectic phase to effect a switching phenomenon in an electrooptic display device has been known and is described by N.A. Clark and S.T. Lagerwall in App. Phys. Lett., 36, 899 (1980). Such devices operate with low electric power consumption while providing a more rapid switching than is realized in electrooptic display devices dependent upon the properties of liquid crystals of the nematic type. Display devices of the ferroelectric type rely upon two tilted configurations of smectic liquid crystal molecules to provide two states of equal energy. Switching from one state to the other is accomplished by applying an electric field across a pair of electrodes sandwiching a layer of the ferroelectric liquid crystal material.

Examples of ferroelectric liquid crystal compounds of the smectic type are described, for example, by G. Decobert and J.C. Dubois in Mol. Cryst. Liq. Cryst., 1984, Vol. 114, pp. 237-247; by J.W. Goodby and

T.M. Leslie in Liquid Crystals and Ordered Fluids, Edited by A.C. Griffin and J.F. Johnson, Plenum Press, Vol. 4, pp. 1 - 32; and in European Patent Application 0110299 A2, published June 13, 1984. In general, it is well recognized that the suitability and operating efficiency of an electrooptic device will be dependent upon the chemical structure of a liquid crystal compound employed therein and that such properties will be influenced by such molecular factors as rigidity or stiffness, morphology, crystallinity and intermolecular forces.

In the production of ferroelectric liquid crystal compounds of the smectic type for application in ferroelectric devices, it will be advantageous if the ferroelectric liquid crystal material shows a smectic phase over a wide range of temperatures including room temperature. In addition, it will be beneficial if the liquid crystal material shows high spontaneous polarization so that an electrooptic device dependent thereon can be operated at reduced driving voltages. These properties are influenced by the molecular structure of the liquid crystal compounds. Accordingly, there is an interest in ferroelectric, smectic liquid crystal compounds and compositions which exhibit favorable spontaneous polarization values and which show their smectic character over a wide range of temperatures, especially at room temperature.

## SUMMARY OF THE INVENTION

The present invention provides a class of smectic liquid crystal compounds which exhibit a desirable range of smectic behavior and favorable spontaneous polarization values and is based upon the discovery that such properties can be obtained by incorporating a fluoro substituent into the core-segment of certain polyaromatic ester liquid crystal compounds.

There is, thus, provided a class of smectic liquid crystal compounds having the formula (I)

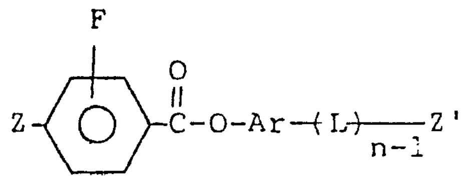

(I)

wherein Ar is p-phenylene or p,p'-biphenylene; L is a linking group selected from $-CH_2-$, $-O-$, $-\overset{O}{\overset{\|}{C}}-O-$, or $-O-\overset{O}{\overset{\|}{C}}-$; n is an integer one or two; each of Z and Z' is alkyl, alkoxy, alkoxyalkyl or an optically active group containing an asymmetric center; at least one of Z and Z' being said optically active group containing an asymmetric center.

## DETAILED DESCRIPTION OF THE INVENTION

Liquid crystal compounds of the present invention will typically show a ferroelectric phase which, as used herein, refers to a smectic phase, such as a chiral smectic I phase, a chiral smectic H phase or a chiral smectic C phase (which phases are referred to respectively, by the abbreviations $S_I$*, $S_H$* and $S_C$*). Liquid crystal compounds of the type represented by formula (I) can be used as ferroelectric liquid crystal compounds in a ferroelectric device or can be employed in admixture with other liquid crystal compounds to provide mixtures exhibiting ferroelectric behavior. Preferred liquid crystal compounds of the invention will be those which exhibit the chiral smectic C ($S_C$*) phase especially suited to the provision of compositions useful in ferroelectric display devices.

The ferroelectric liquid crystal compounds of the invention have the formula

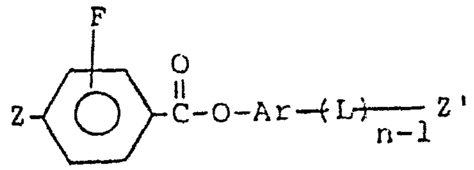

(I)

wherein Ar represents the aromatic p-phenylene or p,p'-biphenylene divalent radicals; L is a linking group ($-CH_2-$, $-O-$, $-\overset{O}{\overset{\|}{C}}-O-$ or $-O-\overset{O}{\overset{\|}{C}}-$; Z is alkyl (e.g., a straight or branched alkyl group of from 8 to 20 carbon atoms), alkoxy, alkoxyalkyl or an optically active group containing an asymmetric center. Z' is also selected from alkyl, alkoxy, alkoxyalkyl or an optically active group containing an asymmetric center, at least one of Z and Z' being such an optically active group. From inspection of formula (I), it can be seen that the liquid crystal compounds of the invention include an aromatic fluorine-containing "core-segment" represented by the formula (Ia)

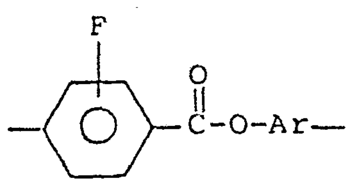

(Ia)

and a pair of "tail" groups, -Z and $-(L)_{n-1}-Z'$, at least one of the tail groups containing a chiral group, i.e., an optically active group containing an asymmetric carbon center. Inasmuch as either of the tail groups can contain the aforementioned chiral group, it will be noted that the chiral group can be varied in its position with

respect to the fluorine-containing aromatic nucleus and the ester linkage of the core-segment.

In the liquid crystal compounds of formula (I), linking group L can be $-CH_2-$, -O-, $-\overset{O}{\overset{\|}{C}}-O-$ or $-O-\overset{O}{\overset{\|}{C}}-$ and serves to link group Z' (which can be alkyl, alkoxy, alkoxyalkyl or an optically active group) to the aromatic moiety, Ar. Linking group L can be present or absent, depending upon whether n represents the integer two or one, respectively. It will be seen that the Z' group will be attached directly to the aromatic moiety Ar when n is one. In the compounds of formula (I), any of the Z' groups as previously defined can be employed when n is the integer two, except that, the L and Z' groups should not in combination form a carbonate ($-O-\overset{O}{\overset{\|}{C}}-O-$) or peroxy (-O-O- or $-\overset{O}{\overset{\|}{C}}-O-O-$) group. Thus, when linking group L is $-\overset{O}{\overset{\|}{C}}-O-$, $-O-\overset{O}{\overset{\|}{C}}-$ or -O-, i.e., when n is two, Z' will not be alkoxy.

Among liquid crystal compounds represented by the general formula (I) are those having the formula (II)

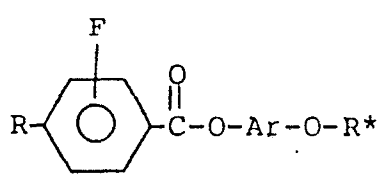

(II)

wherein Ar is p-phenylene or p,p'-biphenylene; R represents alkyl, alkoxy or alkoxyalkyl; and R* is an optically active group containing an asymmetric carbon atom. Suitable alkyl groups are the branched and unbranched alkyl groups of from about 8 to about 20 carbon atoms. Examples include the n-alkyl groups of from 8 to 20

carbon atoms, such as n-octyl, n-decyl and n-dodecyl. Examples of suitable alkoxy groups are n-octyloxy, n-decyloxy and n-dodecyloxy. The R group can also be alkoxyalkyl ($R^1$-O-$R^2$-, wherein $R^1$ is alkyl and $R^2$ is alkylene such as methylene or ethylene). Suitable examples are n-octyloxymethyl and 2-(n-dodecyloxy)ethyl. As used herein, the term alkoxyalkyl refers to an alkyl group interrupted by one or more oxygen atoms, such as is the case where R is the aforementioned group $R^1$-O-$R^2$-; or the group $R^1$-O-$R^2$-O-$R^3$-, wherein $R^1$ and $R^2$ are as previously defined and $R^3$ represents alkylene, such as methylene or ethylene. Typically, the total number of carbon atoms comprising the $R^1$, $R^2$ and $R^3$ groups will be in the range of from 5 to 8. Examples of alkoxyalkyl groups of the latter structure include $CH_3-O-CH_2-CH_2-O-CH_2-CH_2-$; $CH_3-CH_2-O-CH_2-CH_2-O-CH_2-CH_2-$; and $CH_3-(CH_2)_3-O-CH_2-CH_2-O-CH_2-CH_2-$.

The R* group in the liquid crystal compounds of formula (II) is an optically active group represented by the formula $-(CH_2)_a-\overset{R^4}{\overset{|}{C}}H-R^5$, wherein "a" is zero or an integer from 1 to 8 and wherein each of $R^4$ and $R^5$ is alkyl (e.g., methyl or ethyl), halogen (e.g., chloro or bromo), alkoxy (e.g., methoxy, ethoxy) or alkoxyalkyl (e.g., 2-ethoxyethyl or 2-butoxyethyl), provided that $R^4$ and $R^5$ are different from each other. Preferably, "a" will be zero or one and each of $R^4$ and $R^5$ will be dissimilar alkyl groups. Suitable examples of R* groups include $-CH_2-\overset{CH_3}{\overset{|}{C}}H-CH_2-CH_3$, i.e., 2-methylbutyl; and $-\overset{CH_3}{\overset{|}{C}}H-(CH_2)_5-CH_3$, i.e., the 2-octyl group. Other groups having an asymmetric carbon atom can be employed although the 2-octyl and 2-methylbutyl groups will be preferred from the standpoints of ready availability of starting materials and ease of preparative routes.

The fluoro substituent on the phenylene nucleus of the core-segment of the formula (I) liquid crystal compounds can vary with respect to position. Preferably, from the standpoint of practical preparation, the fluoro substituent will be positioned ortho to the -Z tail group. If desired, additional substituent groups can be present on the aromatic nucleus, including fluoro, other halogen atoms, cyano, nitro or the like, provided that the presence of any additional substituent(s) does not negate the formation of a ferroelectric liquid crystalline phase.

The divalent arylene group represented by -Ar- can be p-phenylene or p,p'-biphenylene, i.e., 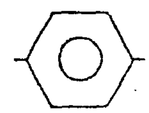 or 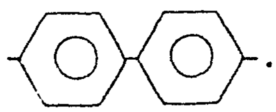. These groups can if desired contain one or more substituent groups provided the presence of any substituent group(s) does not prevent the formation of the desired smectic phase. Fluoro, chloro, iodo, cyano, nitro and the like can be employed subject to the aforementioned proviso.

Another class of smectic liquid crystal compounds of the type represented by general formula (I) is a class of smectic liquid crystal compounds having the formula (III)

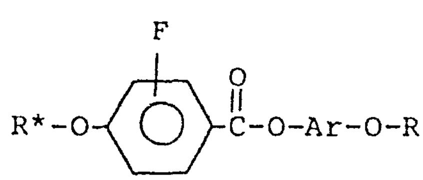 (III)

wherein each of R, R* and Ar has the meaning set forth in connection with the liquid crystal compounds of formula (II). Preferably, the fluoro substituent will be present

in an *ortho* relationship to the -OR* tail moiety. It will be seen from inspection of the compounds of formula (III) that the chiral tail moiety thereof is positioned oppositely with respect to the core-segment when compared with the compounds of formula (II).

Other classes of ferroelectric liquid crystal compounds representative of the formula (I) liquid crystal compounds include those having the following formulas

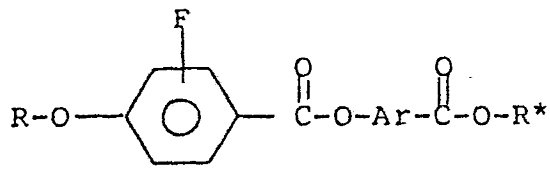

(IV)

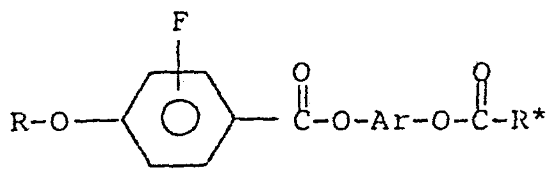

(V)

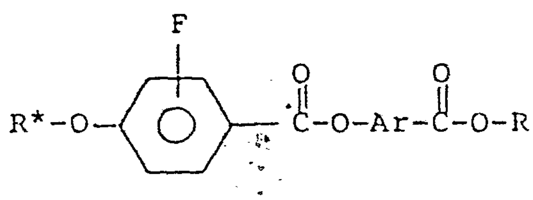

(VI)

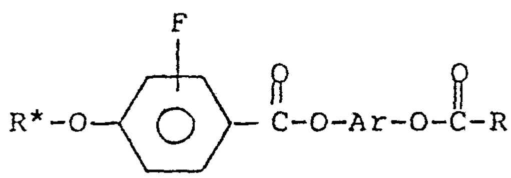

(VII)

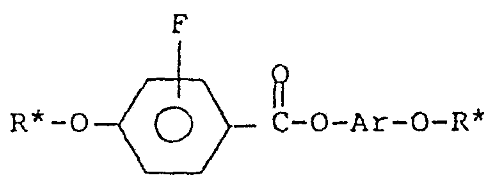

(VIII)

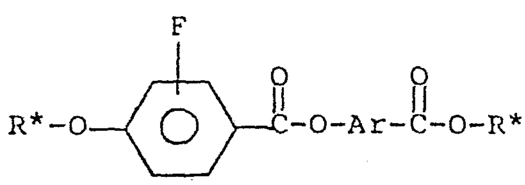

(IX)

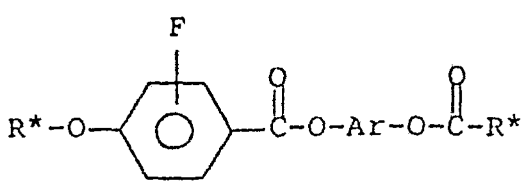

(X)

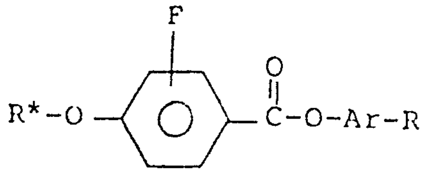

(XI)

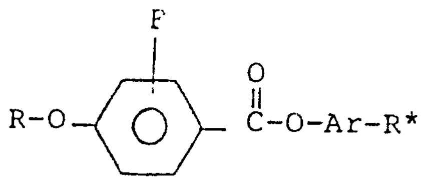

(XII)

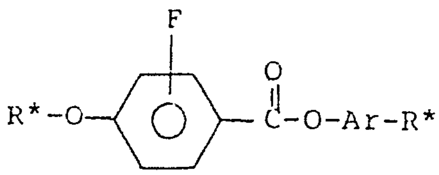

(XIII)

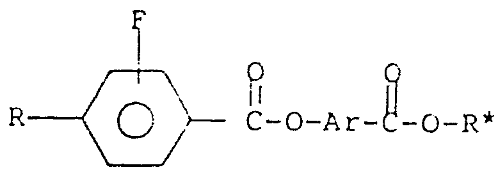

(XIV)

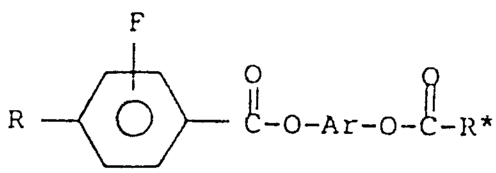

(XV)

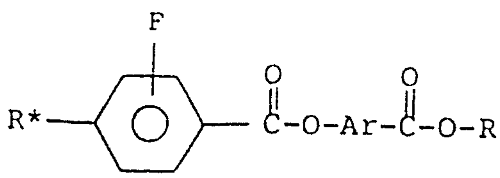

(XVI)

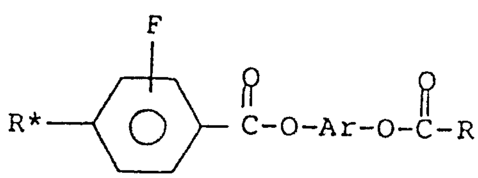

(XVII)

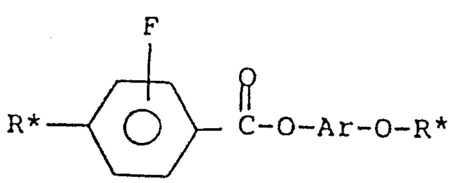

(XVIII)

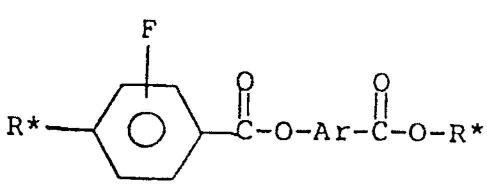

(XIX)

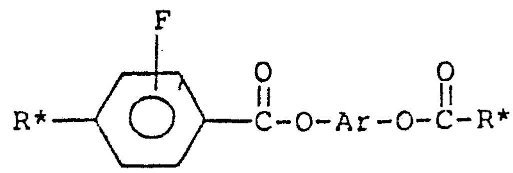

(XX)

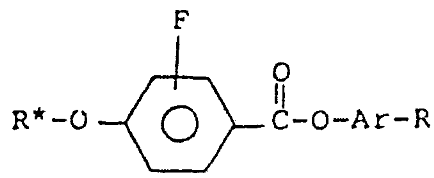

(XXI)

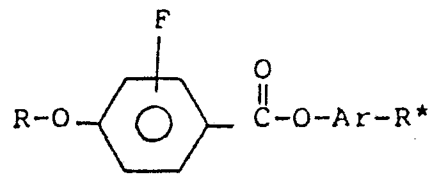

(XXII)

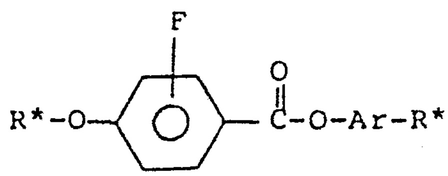

(XXIII)

wherein Ar, R, and R* have the meanings decribed hereinbefore and wherein the fluoro substituent is positioned, preferably, in an ortho relation to the terminal -R, -R*, -OR or -OR* tail moiety.

The liquid crystal compounds of the invention can be prepared by resort to conventional esterification procedures. The compounds of formula (I) can be prepared, for example, by reacting an acid halide and an alcohol according to the following reaction scheme, wherein Hal represents halogen:

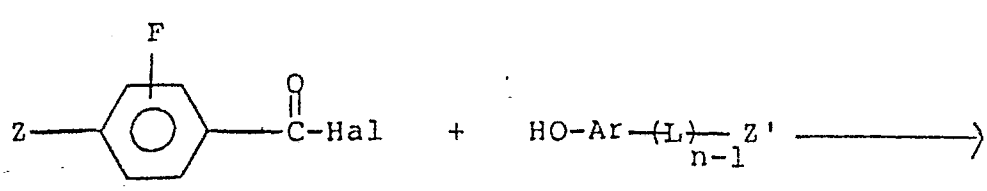

(I-A) (I-B)

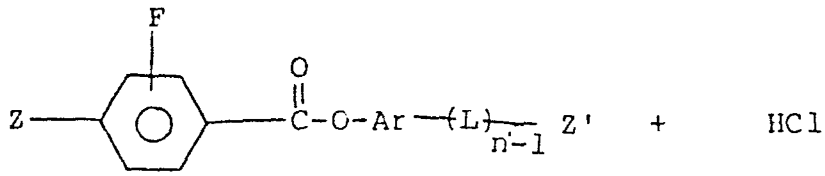


(I)

Synthesis of the starting materials used in the preparation of the liquid crystal compounds of the invention will vary depending upon the particular structure desired in the liquid crystal compound. An acid halide reactant of the type represented by formula (I-A) wherein Z is n-alkoxy (-OR) can be prepared by etherifying the corresponding lower alkyl ester using a halide such as R-Br; and converting the ester via saponification, acidification and reaction with thionyl halide (e.g., chloride) to starting product (I-A), illustrated as follows:

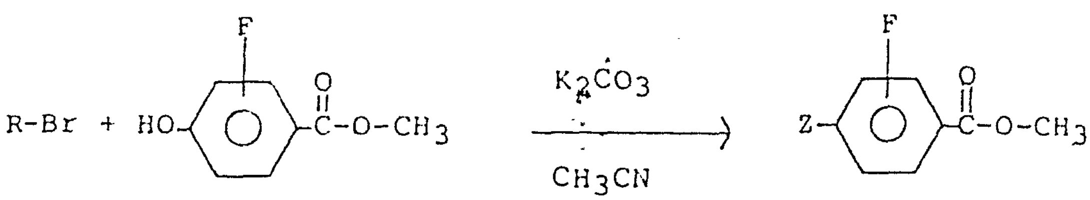


(I-C)

(I-C)

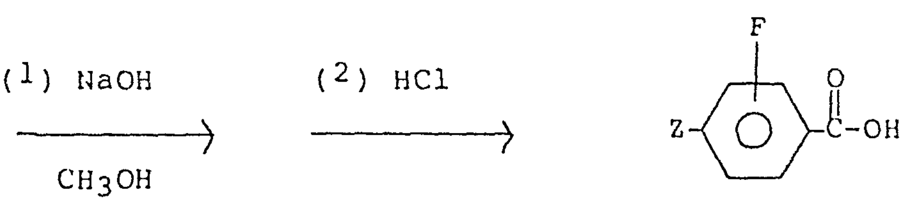


(I-D)

(I-D)

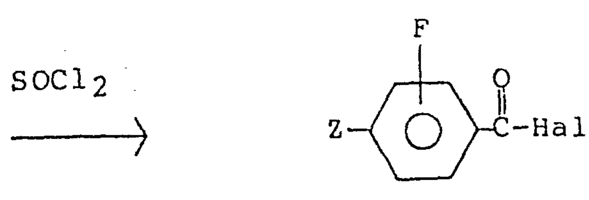


(I-A)

A starting material of the type represented by formula (I-A) wherein Z is n-alkyl (-R) can be prepared by esterification of a 4-alkylbenzoyl halide (e.g., chloride) to the corresponding methyl ester, using methanol; nitration, using nitric acid, to effect 3-nitro-substitution; reduction via catalytic hydrogenation to the corresponding 3-amino-substituted compound; diazotization followed by thermolysis (Schiemann Reaction), using sodium nitrate and hydrofluoboric acid for the diazotization and ortho-dichlorobenzene for the thermolysis, to provide the corresponding 3-fluoro-substituted compound; hydrolysis/saponification, using aqueous sodium hydroxide, for production of the corresponding acid compound; and reaction with thionyl chloride for conversion to the acid chloride. This scheme is illustrated as follows:

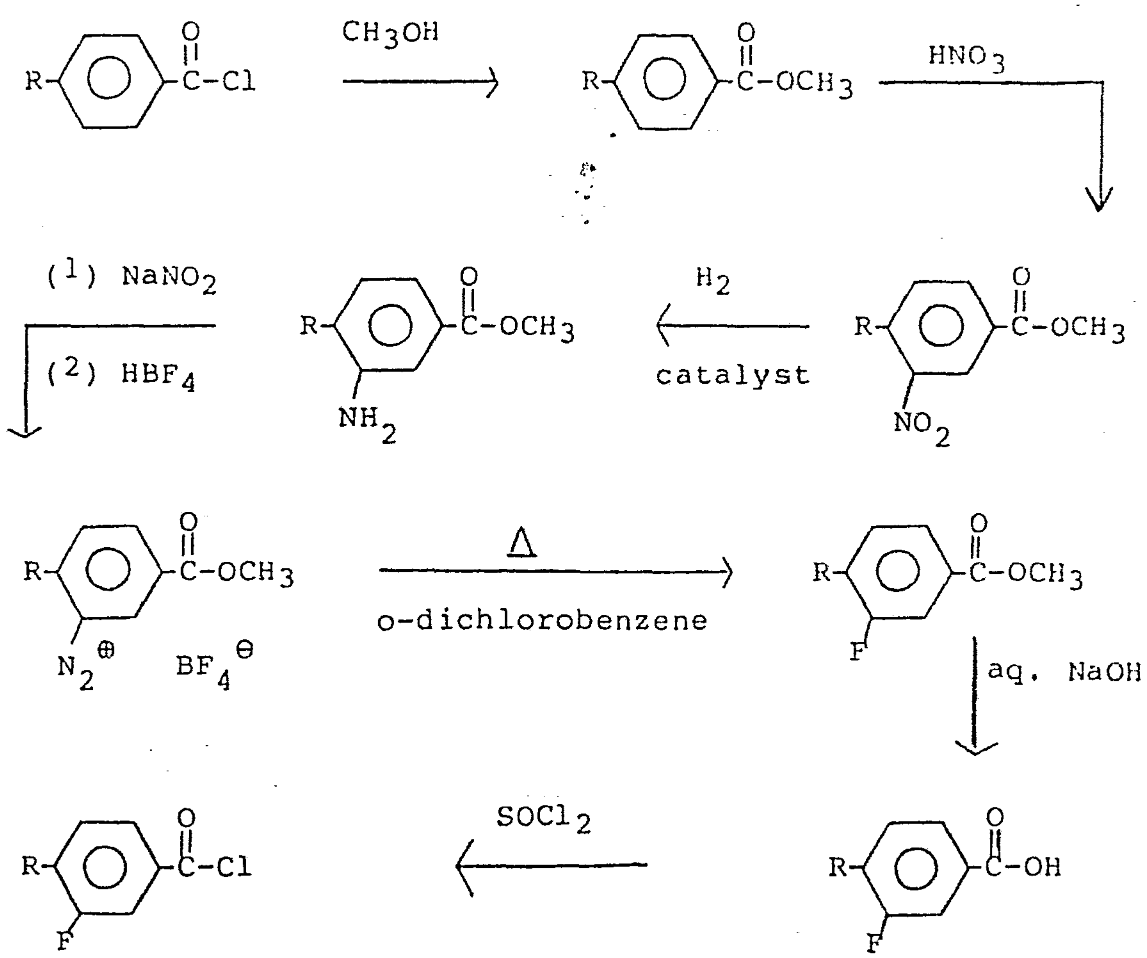

Synthesis of starting material (I-B) will be dependent upon the particular nature of linking group L and the value of subscript n. For example, when L is -O- and n is two, an etherification reaction involving an alkyl halide such as Z'Br and a dihydric alcohol can be employed, as illustrated in the following scheme:

$$HO-Ar-OH \quad + \quad Z'-Br \longrightarrow HO-Ar-O-Z' \qquad \text{(I-B1)}$$

A starting material of the type represented by formula (I-B) wherein L is $-\overset{O}{\overset{\|}{C}}-O-$ and n is two can be prepared, for example, by reaction of a p-hydroxyaroyl chloride and an alcohol HO-Z', according to the following scheme:

$$HO-Ar-\overset{O}{\overset{\|}{C}}-Cl \quad + \quad HO'Z' \longrightarrow HO-Ar-\overset{O}{\overset{\|}{C}}-O-Z' \qquad \text{(I-B2)}$$

Similarly, a starting material of the type represented by formula (I-B) wherein L is $-O-\overset{O}{\overset{\|}{C}}-$ and n is two can be prepared by reaction a blocked dihydric alcohol (such as a benzyl-blocked phenol) with an acyl chloride $Z'-\overset{O}{\overset{\|}{C}}-Cl$, followed by deblocking in known manner. This can be illustrated by the following reaction scheme:

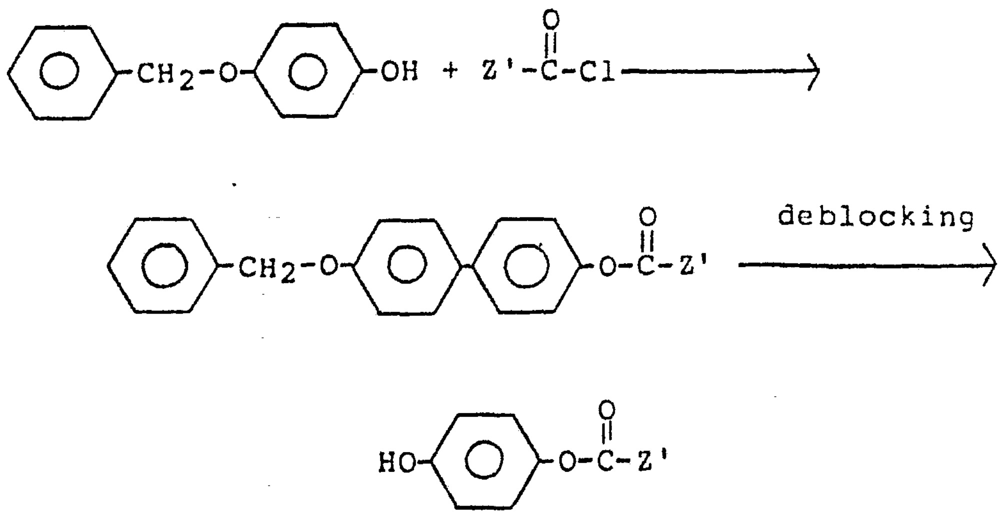


(I-B3)

The esterification of reactants represented by formulas (I-A) and (I-B) can be accomplished according to known methods in a suitable organic solvent such as dichloromethane ($CH_2Cl_2$) using an acid acceptor such as pyridine (Py), as is illustrated by the following representative scheme:

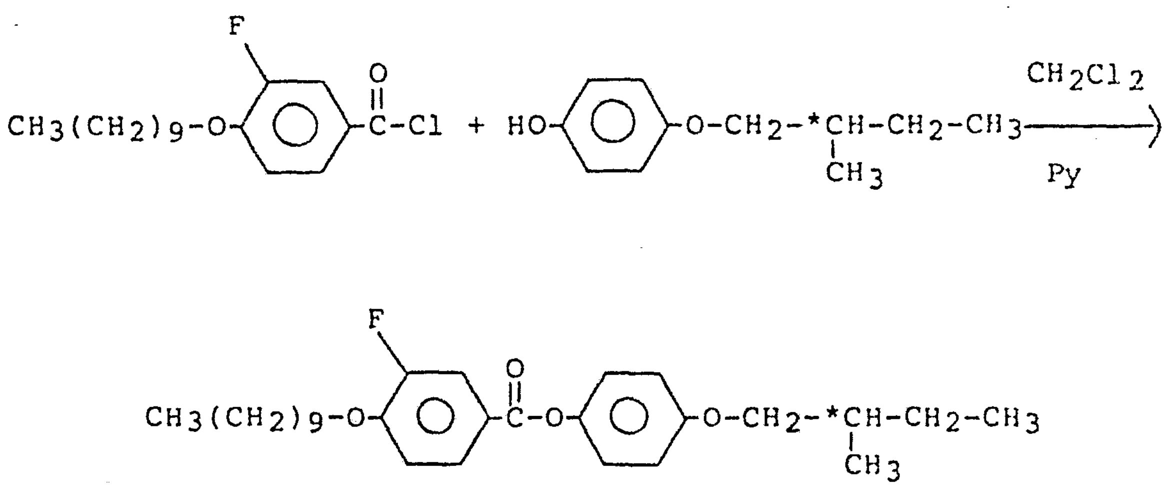


From the inspection of formula (I), it will be seen that the aromatic fluorine-containing core segment can include two or three aromatic rings. The preparation of a liquid crystal ester of a type represented, for

example, by formula (II) and having a core-segment with two aromatic nuclei can be illustrated by the following Reaction Schemes A through C, showing the synthesis of acid halide and alcohol starting materials and the esterification thereof to a desired liquid crystal ester compound.

Reaction Scheme A:

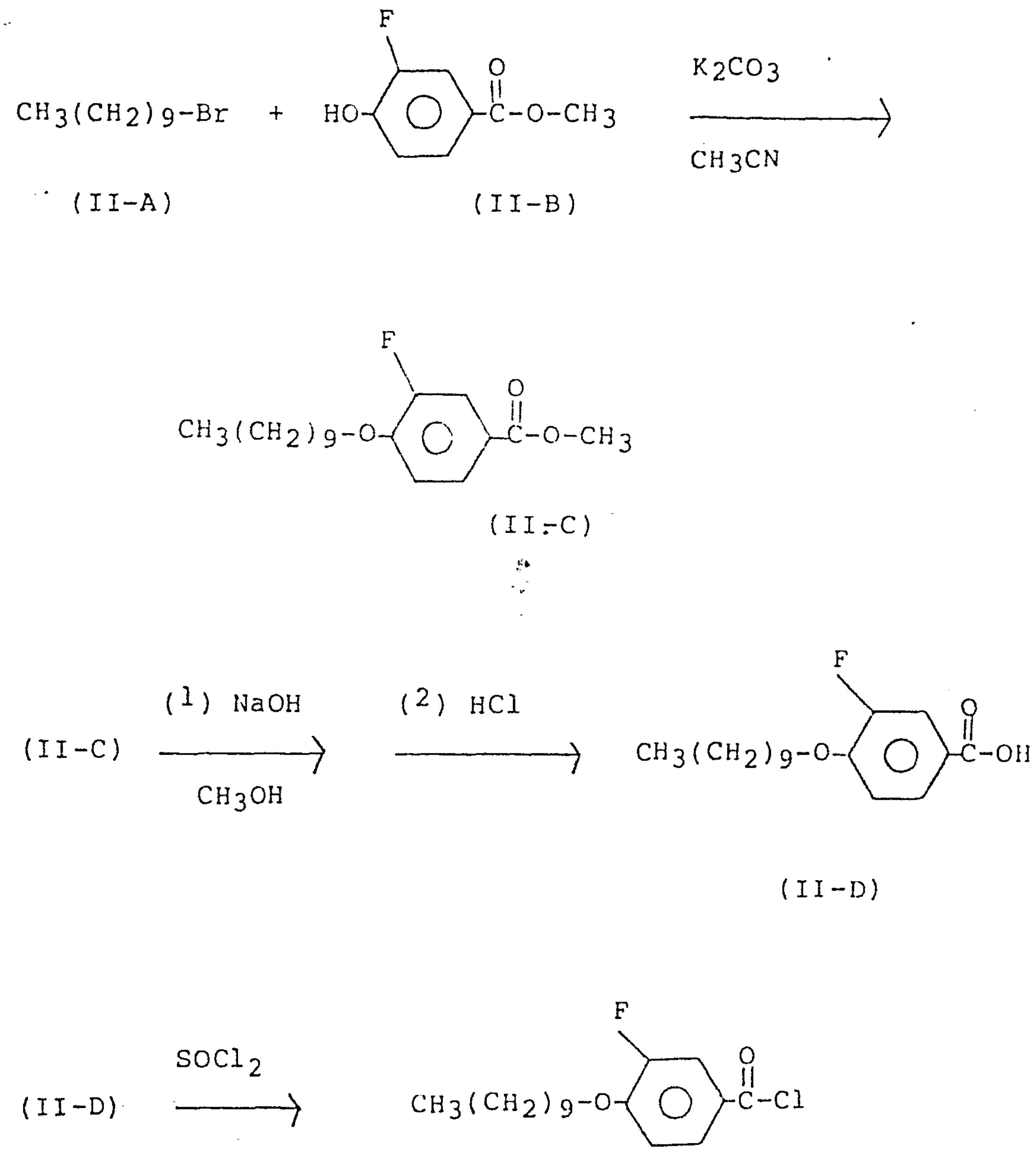


(II-A)
(II-B)
(II-C)
(II-C)
(II-D)
(II-D)
(II-E)

Reaction Scheme B:

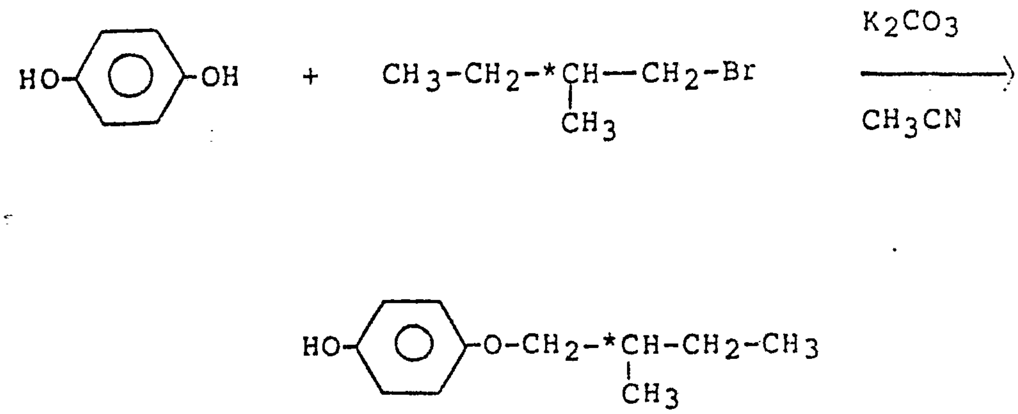


(II-F)

Reaction Scheme C:

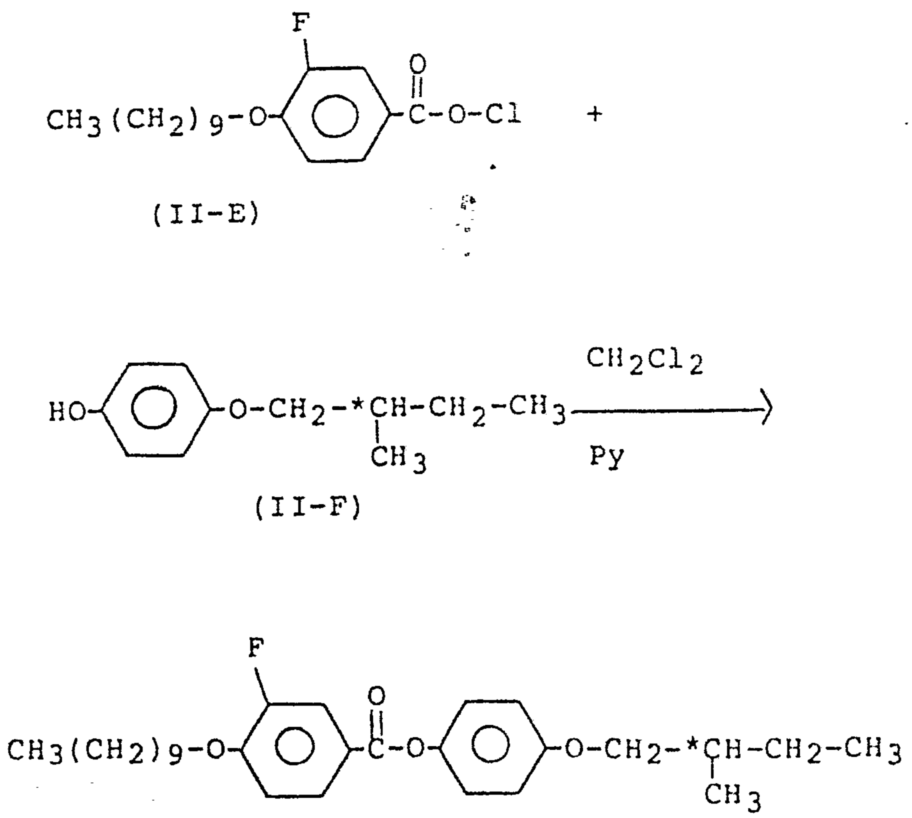


(II-E)

(II-F)

(II-G)

The esterification of starting compounds (II-E) and (II-F), as illustrated in Reaction Scheme C, can be accomplished in an organic solvent such as dichloromethane using an acid acceptor such as pyridine.

A liquid crystal ester compound of a type represented by the formula (II) having a core-segment with three rings can be prepared in an analogous manner, employing in place of starting material (II-F), a starting material having the formula (II-H):

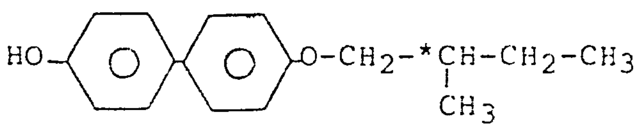

(II-H)

The formula (II-H) starting material can be prepared in a manner analogous to the reaction shown in Reaction Scheme B, using p,p'-biphenol in place of hydroquinone.

A liquid crystal ester compound of the type represented by formula (III) having a core-segment with three aromatic rings and having the chiral tail moiety as a substituent to the acid derived end of the core-segment can be prepared via the following synthetic route:

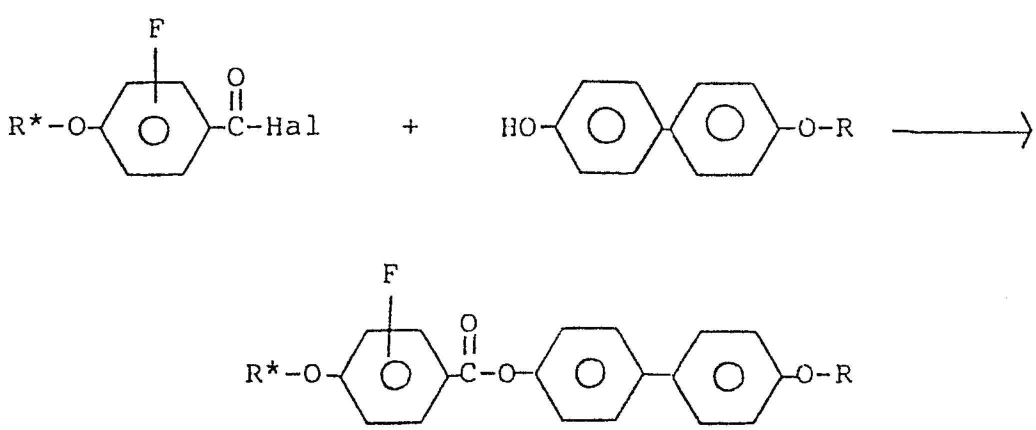

Inclusive of liquid crystal ester compounds represented by the structure of formula (I) are liquid

crystal compounds of the following structures. It will be appreciated that one or more hydrogen atoms in each aromatic nucleus of such compounds can, if desired, be replaced with a substituent group such as alkyl, halo (e.g., chloro, bromo, iodo, fluoro), nitro or the like.

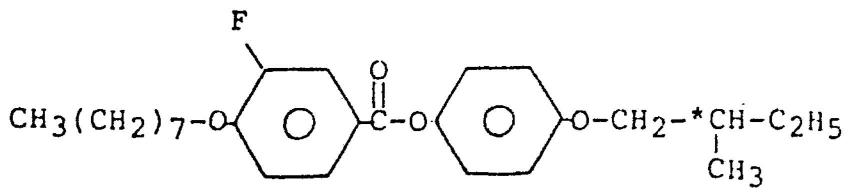

(XXIV)

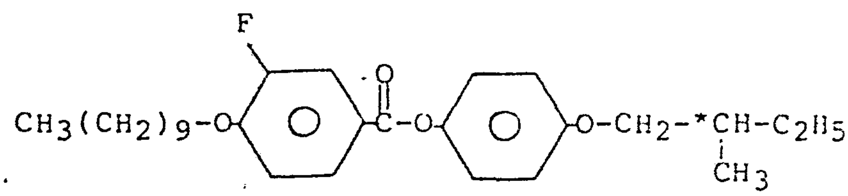

(XXV)

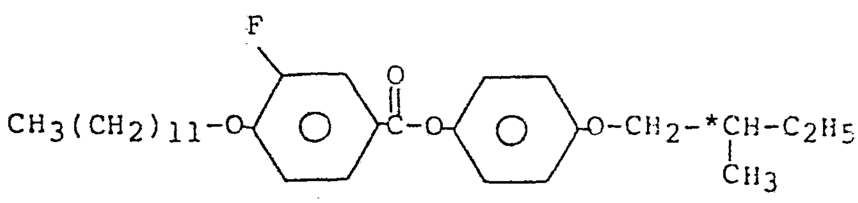

(XXVI)

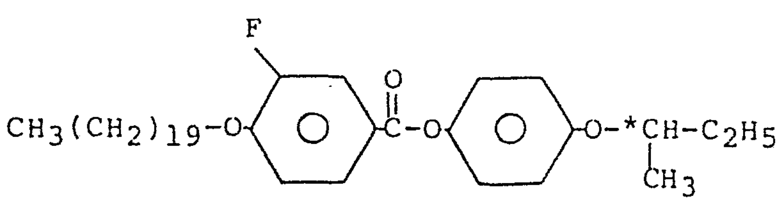

(XXVII)

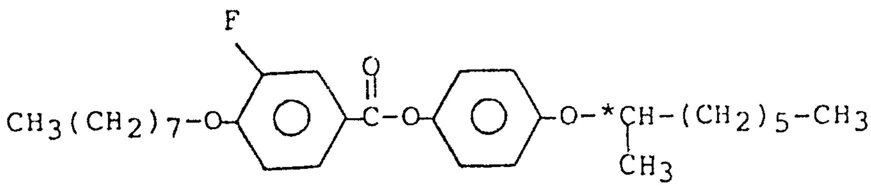

(XXVIII)

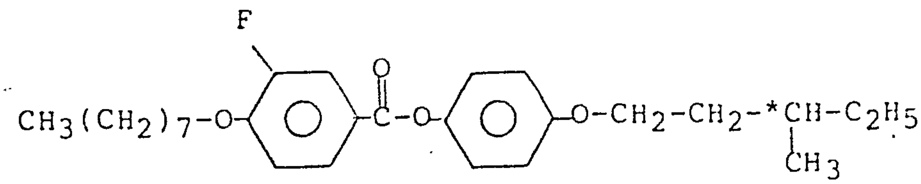

(XXIX)

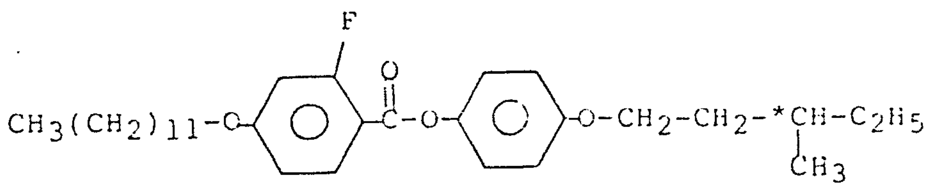

(XXX)

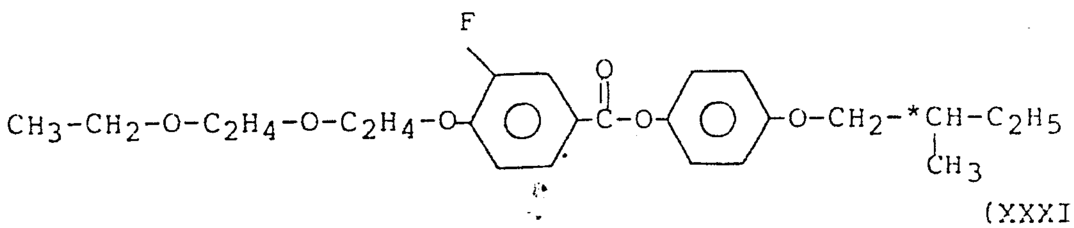

(XXXI)

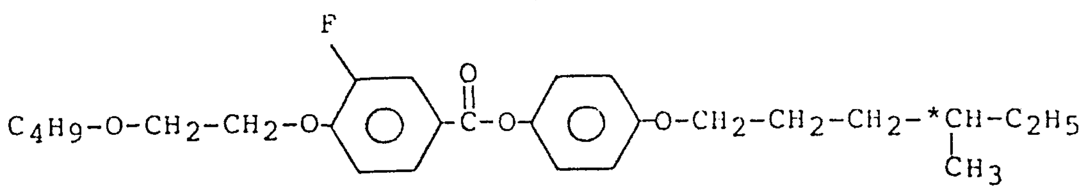

(XXXII)

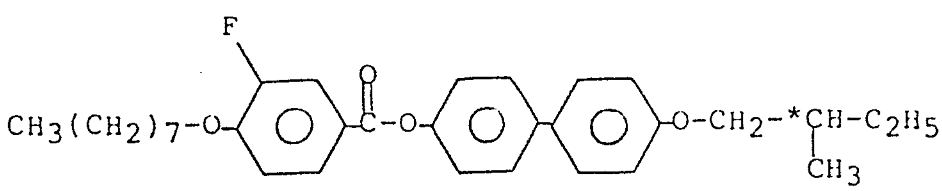

(XXXIII)

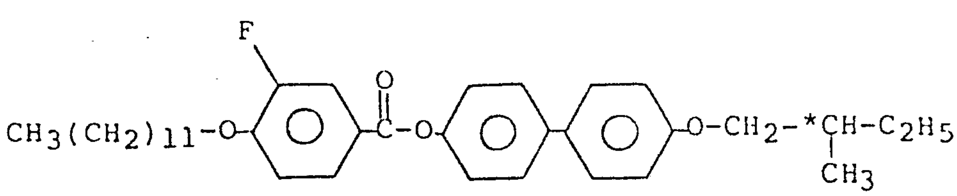

(XXXIV)

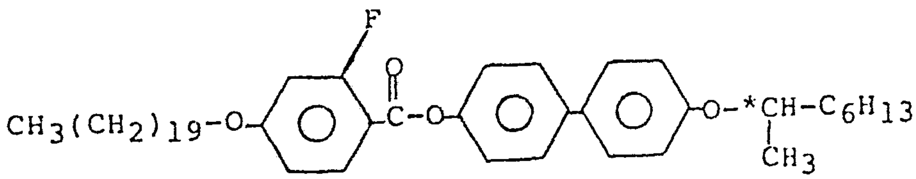
(XXXV)

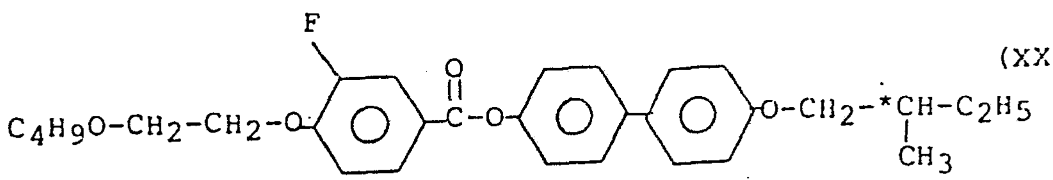
(XXXVI)

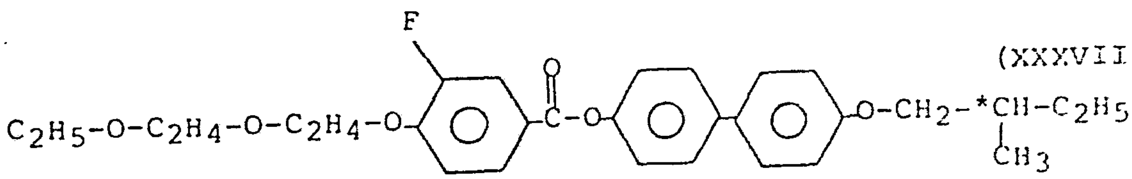
(XXXVII)

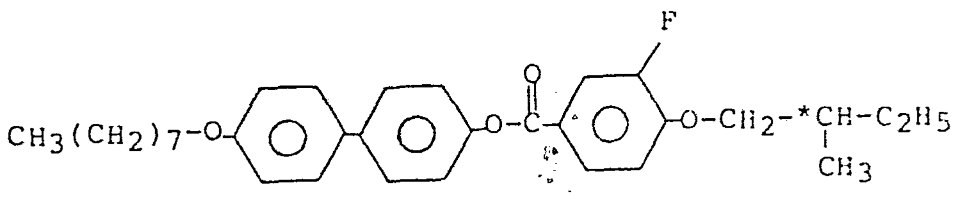
(XXXVIII)

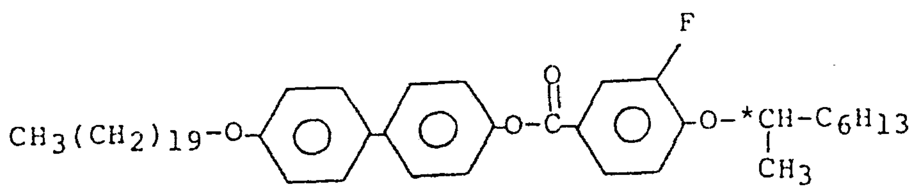
(XXXIX)

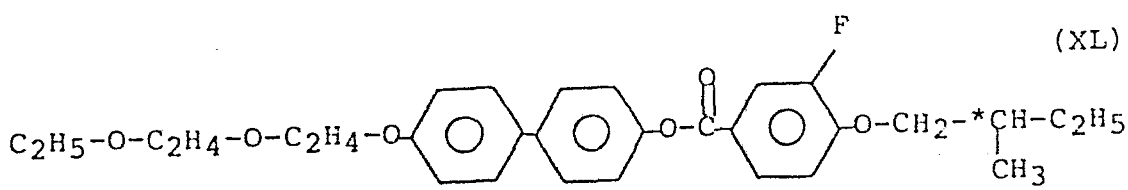
(XL)

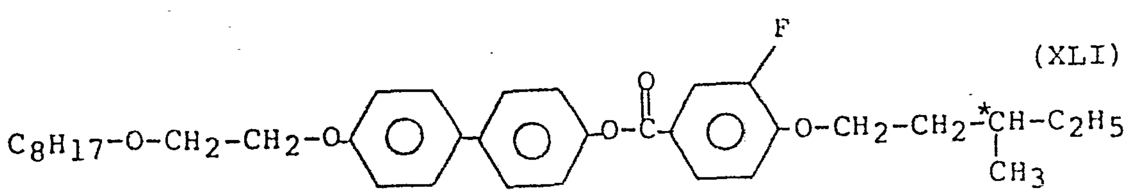
(XLI)

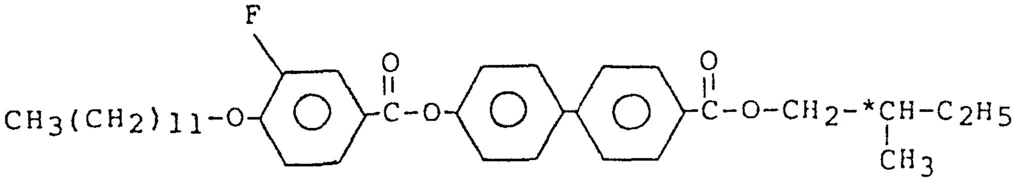
(XLII)

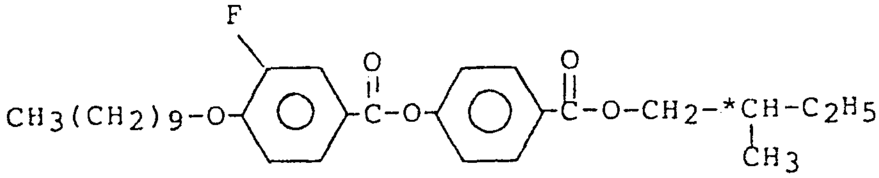
(XLIII)

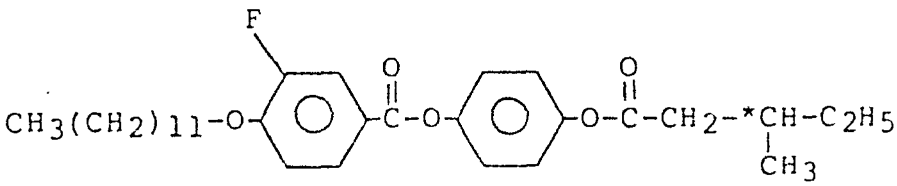
(XLIV)

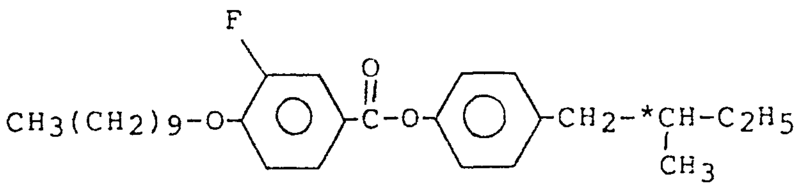
(XLV)

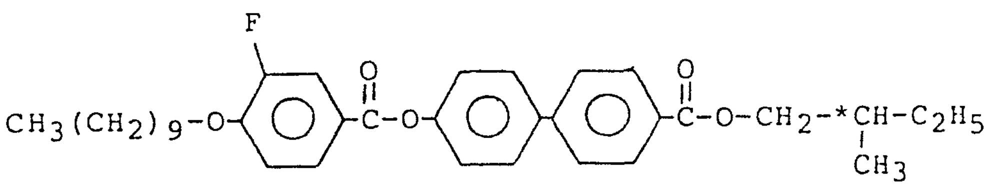
(XLVI)

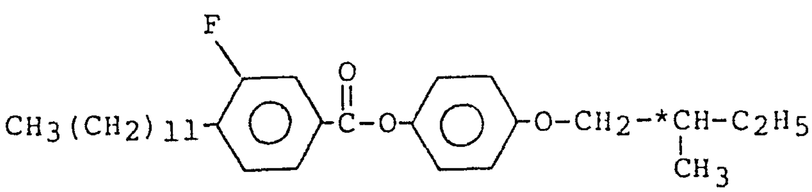
(XLVII)

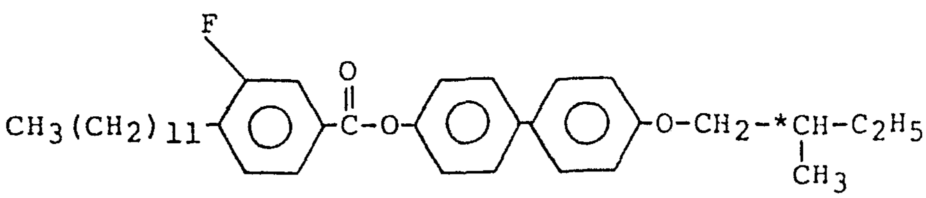
(XLVIII)

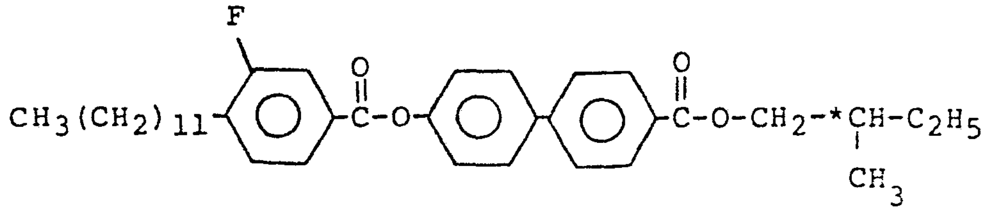

(XLIX)

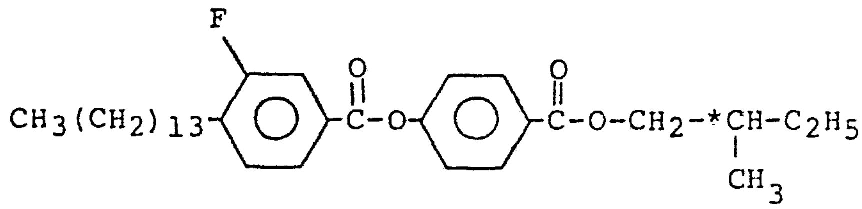

(L)

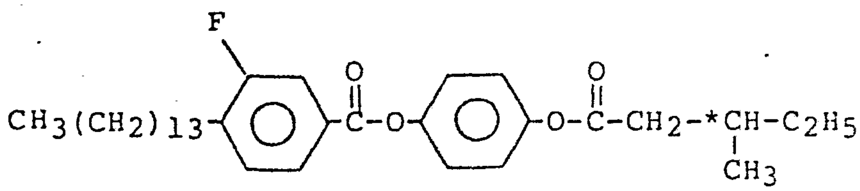

(LI)

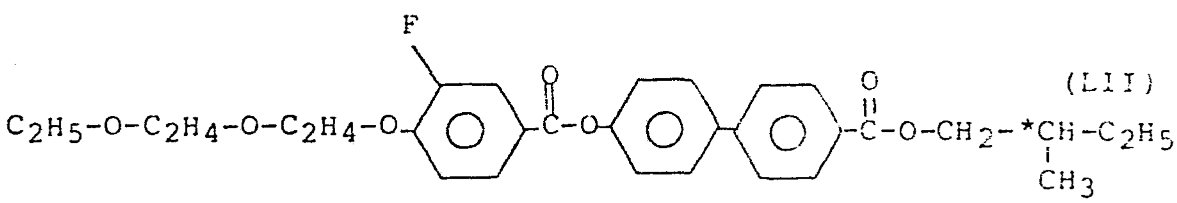

(LII)

The liquid crystal compounds of the invention are characterized by the presence of a fluorine-containing core-segment believed to contribute to the realization of high spontaneous polarization values and to the formation of a ferroelectric smectic phase. While a single liquid crystal compound of the invention may exhibit a smectic phase and ferroelectricity, a compound which does not show such properties can be used in admixture with conventional ferroelectric liquid crystal compounds or other liquid crystal compounds of the type represented by formula (I) to provide a ferroelectric liquid crystal composition suited to employment in a ferroelectric display device.

It will be appreciated that structural variations within the liquid crystal compounds represented by formula (I) may produce corresponding variations in observed phases, spontaneous polarization or other properties. For example, the liquid crystal compound represented by formula (XXV) exhibits a smectic C phase over the range of 35° to 42°C and a spontaneous polarization value of 12.8 $nC/cm^2$, while the corresponding liquid crystal compound having an n-octyloxy tail in lieu of the n-decyloxy tail shows no detectable smectic phase. The latter compound can be used in admixture with other liquid crystal compounds for the provision of eutectic compositions useful in ferroelectric devices. Similarly, the corresponding compound having an n-octyloxy tail and an additional phenylene nucleus in the core-segment, i.e., the liquid crystal compound of formula (XXXIII), shows a smectic C phase (over a range of 66° to 137°C) and a spontaneous polarization value of 75.6 $nC/cm^2$.

The following examples which are intended to be non-limiting are representative of the present invention.

EXAMPLE 1

This example illustrates the preparation of the 4-[(S)-2-methyl-1-butoxy] phenol ester of 3-fluoro-4-decyloxybenzoic acid.

PART A -- Preparation of methyl 3-fluoro-4-decyloxybenzoate. In a 250 ml., three-necked, round-bottomed flask equipped with a heating mantle, magnetic stirrer, thermometer and a condenser connected to a nitrogen bubbler were placed 1.70 grams (0.01 mole) of methyl 3-fluoro-4-hydroxybenzoate; 3.1 mls. of 1-bromodecane (0.015 mole); 6.9 grams (0.05 mole) of powdered anhydrous potassium carbonate and 100 mls. of anhydrous acetonitrile. The mixture was stirred under reflux for 16 hours. Acetonitrile was then partly distilled and 200 mls. of warm dichloromethane were

added. The mixture was filtered through a Celite (tradename) silica pad and the filtrate was evaporated. Flash chromatographic purification of the product on silica with 1:1 dichloromethane/hexanes, followed by low-temperature recrystallization from pentane yielded 2.8 grams (90%) of white crystalline product exhibiting a melting point (uncorrected) of 47-8°C (using a Fisher-Johns melting point apparatus) and having the formula

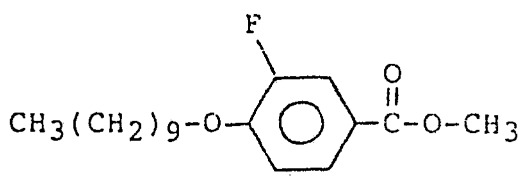

confirmed by thin layer chromatographic (TLC), nuclear magnetic resonance (NMR), infrared (IR) and mass spectral analyses.

<u>PART B -- Preparation of 3-fluoro-4-decyloxybenzoyl chloride</u>. One gram of methyl 3-fluoro-4-decyloxybenzoate, prepared as described in Part A of this Example, was saponified by boiling in 25 mls. of methanol with one ml. of 50% aqueous sodium hydroxide solution. Water was added as methanol was removed by distillation. After acidification with hydrochloric acid, the resulting white solid material (the corresponding carboxylic acid) was filtered, washed with water and dried. The resulting product (acid) was stirred under reflux for 30 minutes in 10 mls of thionyl chloride for conversion to 3-fluoro-4-decyloxybenzoylchloride. Thionyl chloride was distilled out and carbon tetrachloride (50 mls.) was added and distilled. The resulting product was the 3-fluoro-4-decyloxybenzoyl chloride of the formula

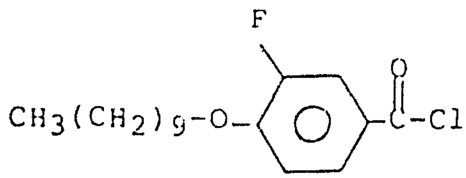

which was used without purification for the production of an ester by the method described in Part D of this Example.

<u>PART C -- Preparation of 4-[(S)-2-methyl-1-butoxy] phenol</u>. A reaction mixture of hydroquinone (18.2 grams); (S)-(+)-1-bromo-2-methylbutane (4.55 grams); anhydrous potassium carbonate (23 grams); and acetonitrile (250 mls.) was allowed to reflux for 40 hours. Flash chromatography using dichloromethane eluent yielded 2.6 grams (48%) of white crystals exhibiting a Fisher-Johns melting point of 44-5°C and having the structure

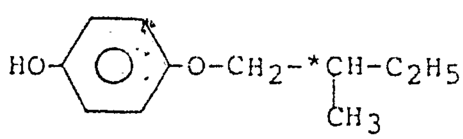

confirmed by TLC, NMR, IR and mass spectral analyses.

<u>PART D -- Preparation of 4-[(S)-2-methyl-1-butoxy] phenol ester of 3-fluoro-4-decyloxybenzoic acid</u>. The liquid acid chloride product prepared as described in Part B of this Example was dissolved in 10 mls. of dichloromethane and 580 mgs. of 4-[(S)-2-methyl-1-butoxy] phenol (prepared as described in Part C of this Example) and 0.55 ml. of pyridine were added. After the reaction mixture was stirred overnight at room temperature, it was diluted with 50 mls. of carbon tetrachloride, extracted with 10% hydrochloric acid, dried, and evaporated. Flash

chromatography with 1:2 dichloromethane/hexanes followed by recrystallization from pentane yielded 985 mgs. (67%) of white crystals exhibiting a Fisher-Johns melting point of 48-9°C and having the structure

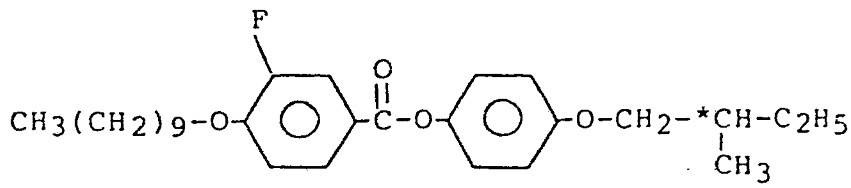

(XXV)

confirmed by TLC, NMR, IR and mass spectral analyses. Elemental analysis for $C_{28}H_{39}FO_4$ provided the following:

| | %C | %H | %F |
|---|---|---|---|
| Calculated | 73.33 | 8.57 | 4.14 |
| Found | 73.23 | 8.64 | 4.12 |

EXAMPLE 2

This Example illustrates the preparation of the 4-[(S)-2-methyl-1-butoxy] phenol ester of 3-fluoro-4-dodecyloxybenzoic acid.

PART A -- Preparation of methyl 3-fluoro-4-dodecyloxybenzoate. Using the method described in Part A of Example 1, the following materials were refluxed for six hours: 1.70 grams of methyl 3-fluoro-4-hydroxybenzoate; 3.6 mls. of 1-bromododecane; 6.9 grams of anhydrous potassium carbonate; and 100 mls of anhydrous acetonitrile. Upon recrystallization from pentane, there were obtained 3.28 grams (97%) of white crystals, exhibitng a Fisher-Johns melting point of 53-5°C and having the structure

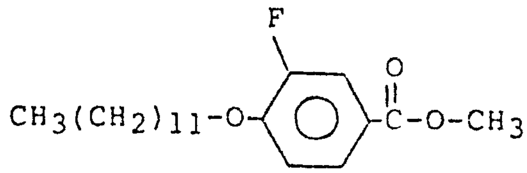

confirmed by TLC, NMR, IR and mass spectral analyses.

PART B -- Preparation of 3-fluoro-4-dodecyloxybenzoyl chloride. Using the method described in Part B of Example 1, one gram of the product of Part A of this Example was saponified, acidified and reacted with thionyl chloride to provide the product 3-fluoro-4-dodecyoxylbenzoyl chloride.

PART C -- Preparation of the 4-[(S)-2-methyl-1-butoyx] phenol ester of 3-fluoro-4-dodecyloxybenzoic acid. The product obtained from Part B of this Example was allowed to react with 540 mgs. of 4-[(S)-2-methyl-1-butoxy] phenol (obtained in the manner described in Part C of Example 1) and 0.51 ml. of pyridine in 5 mls. of dichloromethane. Flash chromatography using 1:3 dichloromethane/hexanes and recrystallization from pentane yielded 1.06 grams (77%) of a white solid exhibiting a Fisher-Johns melting point of 51-52°C and having the structure

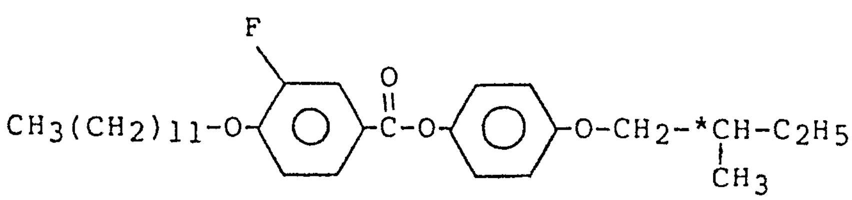 (XXVI)

confirmed by TLC, NMR, IR and mass spectral analyses.

EXAMPLE 3

This Example illustrates the preparation of a liquid crystal compound having a core comprised of three aromatic rings.

PART A -- Preparation of methyl 3-fluoro-4-octyloxybenzoyl chloride. Using the method described in Part A of Example 1, the following materials were refluxed for 16 hours: 1.70 grams (0.01 mole) of methyl-3-fluoro-4-hydroxybenzoate; 2.6 mls. (0.015 mole) of 1-bromooctane; 6.9 grams (0.05 mole) of powdered anhydrous potassium carbonate and 100 mls. of anhydrous acetonitrile. The mixture was filtered through a silica pad and the filtrate was evaporated. Flash chromatography of the crude product on silica with 1:1 dichloromethane/hexanes, followed by low-temperature recrystallization from pentane yielded 2.78 grams (98%) of white crystals exhibiting a Fisher-Johns melting point of 38-40°C and having the structure

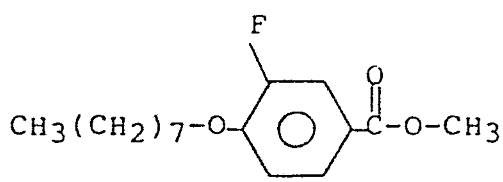

confirmed by TLC, NMR, IR and mass spectral analyses. Using the method described in Part B of Example 1, 700 mgs of the product was saponified, acidified and reacted with thionyl chloride to provide the corresponding acid halide, i.e., 3-fluoro-4-octyloxybenzoyl chloride.

PART B -- Preparation of the 2-methyl-1-butanol ether of 4,4'-biphenol. 3.77 grams of (S)-(-)-2-methyl-1-butanol was converted to its methanesulfonate ester (using the method of R.K. Crossland and K.L. Servis, J. Org. Chem., 35, 3195, (1970) and refluxed for 3 1/2 days in 500 mls. of acetonitrile with 50 grams of p,p'-biphenol and 30 grams of potassium carbonate. Flash chromatography using dichloromethane eluent and recrystallization from hexanes yielded 4.1 grams (37%) of a white solid exhibiting a

Fisher-Johns melting point of 135-7°C and having the structure

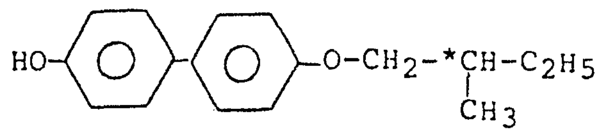

confirmed by TLC, NMR, IR and mass spectral analyses.

PART C -- Preparation of the methyl-3-fluoro-4-octyloxybenzoate ester. The 3-fluoro-4-octyloxybenzoyl chloride obtained in the manner described in Part A of this Example was allowed to react with 635 mgs of the ether compound (prepared as described in Part B of this Example) and 0.42 ml. of pyridine in dichloromethane. Flash chromatography with 1:2 dichloromethane/hexanes, followed by recrystallization from hexanes yielded 868 mgs. (69%) of white crystals exhibiting a Fisher-Johns melting point of 95-6°C and having the structure

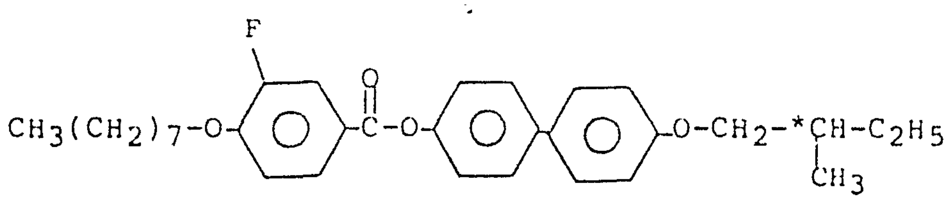

(XXXIII)

confirmed by TLC, NMR, IR and mass spectral analyses. Elemental analysis for $C_{32}H_{39}FO_4$ provided the following

| | %C | %H | %F |
|---|---|---|---|
| Calculated | 75.86 | 7.76 | 3.75 |
| Found | 76.00 | 7.71 | 3.74 |

EXAMPLE 4

Using the reaction sequences illustrated in Example 3, one gram of methyl 3-fluoro-4-dodecyloxybenzoate (prepared as described in Part A of Example 2) was saponified, acidified and reacted with thionyl chloride to provide 3-fluoro-4-dodecyloxybenzoyl chloride (as described in Part B of Example 2) and was allowed to react in dichloromethane with 0.5 ml. of pyridine and 0.75 gram of the biphenol ether product prepared in the manner described in Part B of Example 3. Flash chromatography with 1:2 dichloromethane/hexanes followed by recrystallization from hexanes yielded 1.18 grams (71%) of white crystals exhibiting a Fisher-Johns melting point of 96-7°C and having the structure

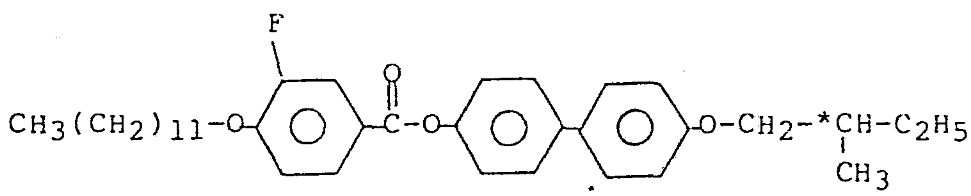

(XXXIV)

Elemental analysis for $C_{36}H_{47}FO_4$ provided the following:

| | %C | %H | %F |
|---|---|---|---|
| Calculated | 76.83 | 8.42 | 3.38 |
| Found | 76.47 | 8.05 | 3.27 |

EXAMPLE 5

PART A -- Preparation of the 2-methyl-butyl ether of 3-fluoro-4-hydroxybenzoic acid. Methyl-3-fluoro-4-hydroxybenzoate (1.70 grams) was allowed to reflux for 21 hours in 100 mls. of acetonitrile with 2.34 grams of (S)-(+)-1-bromo-2-methylbutane and 6.9 grams of

potassium carbonate. Recrystallization of the reaction product from pentane at -78°C yielded white crystals which melted upon warming to room temperature. The product was saponified by boiling in methanol with 50% aqueous soidum hydroxide. Water was added as methanol was removed by distillation. Upon acification with hydrochloric acid, there were recovered 2.08 grams (92%) of the acid product, exhibiting a Fisher-Johns melting point of 102-3°C and having the structure

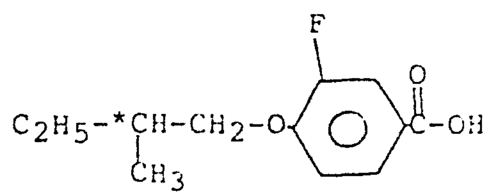

confirmed by TLC, NMR, IR and mass spectral analyses.

PART B -- Preparation of 4-octyloxy-4'-hydroxybiphenyl. A reaction mixture of 4,4'-biphenol (9.3 grams); 1-bromooctane (4.3 mls.); potassium carbonate (6.9 grams); and acetonitrile (250 mls.) was allowed to reflux for 16 hours. Flash chromatography using dichloromethane eluent yielded 3.25 grams (44%) of a white solid exhibiting a melting point of 149-150°C and having the structure

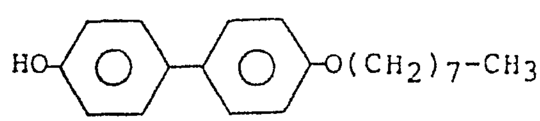

confirmed by TLC, NMR, IR and mass spectral analyses.

PART C -- Preparation of the ester of the 2-methyl-butyl ether of 3-fluoro-4-hydroxybenzoic acid and 4-octyloxy-4'-hydroxybiphenyl. One gram of the acid product prepared in the manner described in Part A of

this Example was converted to the corresponding acid chloride by reacting with thionyl chloride, using the method described in Part B of Example 1. The resulting acid chloride product was allowed to react with 1.32 grams of 4-octyloxy-4'- hydroxybiphenyl (obtained in the manner described in Part B of this Example), and 0.75 ml. of pyridine in 10 mls. of dichloromethane. Flash chromatography with 1:1 dichloromethane/hexanes yielded 1.65 grams (74%) of white crystals exhibiting a Fisher-Johns melting point of 117-8°C and having the structure

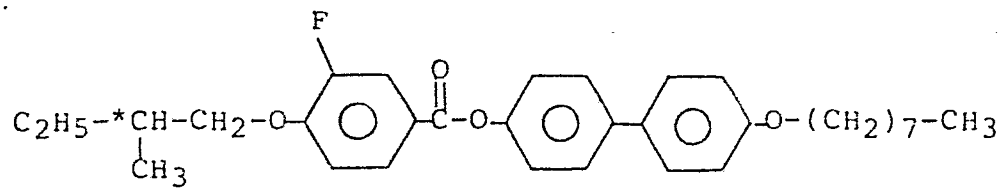

(XXXVIII)

confirmed by TLC, NMR, IR and mass spectral analyses. Elemental analysis for $C_{32}H_{39}FO_4$ provided the following

| | %C | %H | %F |
|---|---|---|---|
| Calculated | 75.86 | 7.76 | 3.75 |
| Found | 75.74 | 7.98 | 3.57 |

## EXAMPLE 6

PART A -- Preparation of 4-benzyloxy-4'-hydroxybiphenyl. Thirty-nine grams of 4,4'-biphenol, 25 mls. of α-bromotoluene, 45 grams of potassium carbonate and 1000 mls. of acetonitrile were allowed to reflux for 24 hours. Product purification was accomplished by multiple recrystallizations from toluene and methanol, yielding 19.0 grams (33%) of white crystals exhibiting a Fisher-Johns melting point of 213-6°C and having the structure

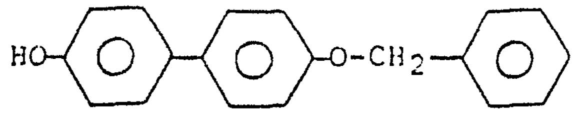

confirmed by TLC, NMR, IR and mass spectral analyses.

PART B -- Preparation of 4-[2-(2-ethoxyethoxy)ethoxy]-4'-benzyloxybiphenyl. Two grams of the product obtaned from Part A of this Example, two grams of 2-(2-bromoethoxy)-1-ethoxyethane, five grams of potassium carbonate and 100 mls. of acetonitrile were refluxed for 24 hours. Flash chromatography using 1% ether in dichloromethane as eluent, followed by recrystallization from dichloromethane/hexanes, yielded 2.62 grams (92%) of white crystals having a Fisher-Johns melting point of 132-3°C and having the structure

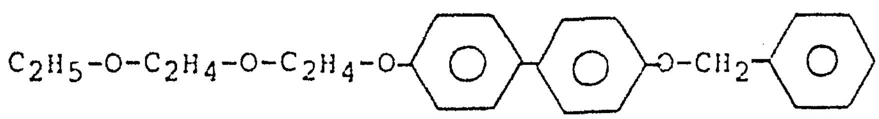

confirmed by TLC, NMR, IR and mass spectral analyses.

PART C -- Preparation of 4-[2-(2-ethoxyethoxy)-ethoxy]-4'-hydroxybiphenyl. Hydrogenation of the compound obtained from Part B of this Example was performed in a 125-ml. stainless steel Parr bomb, using 2.50 grams of the above-referenced compound, 250 mgs. of 5% palladium-on-carbon catalyst and 50 mls. of ethyl acetate. After filtration and solvent evaporation, the product was recrystallized from ether/pentane to yield 1.69 grams (88%) of white crystals exhibiting a Fisher-Jones melting point of 84-5°C and having the structure

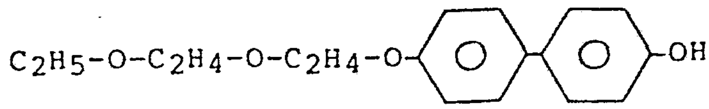

confirmed by TLC, NMR, IR and mass spectral analyses.

PART D -- Preparation of the ester of the 2-methyl-butyl ether of 3-fluoro-4-hydroxybenzoic acid and 4-[2-(2-ethoxyethoxy)ethoxy]-4'-hydroxybiphenyl. Conversion of 0.4 gram of 2-methyl-butyl ether of 3-fluoro-4-hydroxybenzoic acid (prepared as described in Part A of Example 5) to the corresponding acid chloride was effected using thionyl chloride and the method described in Part B of Example 1. The resulting acid chloride product was allowed to react with 0.535 gram of 4-[2-(2-ethoxyethoxy)ethoxy]-4'-hydroxybiphenyl and 0.30 ml. of pyridine in 5 mls. of dichloromethane. Flash chromatography using 2% ether in dichloromethane, followed by recrystallization from dichloromethane/hexane yielded 0.64 gram (71%) of white crystals exhibiting a Fisher-Johns melting point of 95-7°C and having the structure.

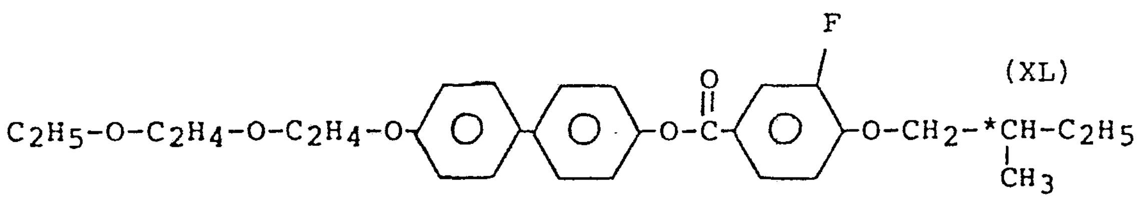

(XL)

confirmed by TLC, NMR, IR and mass spectral analyses. Elemental analysis for $C_{30}H_{35}FO_6$ provided the following

| | %C | %H | %F |
|---|---|---|---|
| Calculated | 70.57 | 6.91 | 3.72 |
| Found | 70.59 | 6.87 | 3.77 |

EXAMPLE 7

This example illustrates the preparation of 4-[(S)-2-methyl-1-butoxycarbonyl]-4'-biphenyl 3-fluoro-4-decyloxybenzoate according the following reaction scheme:

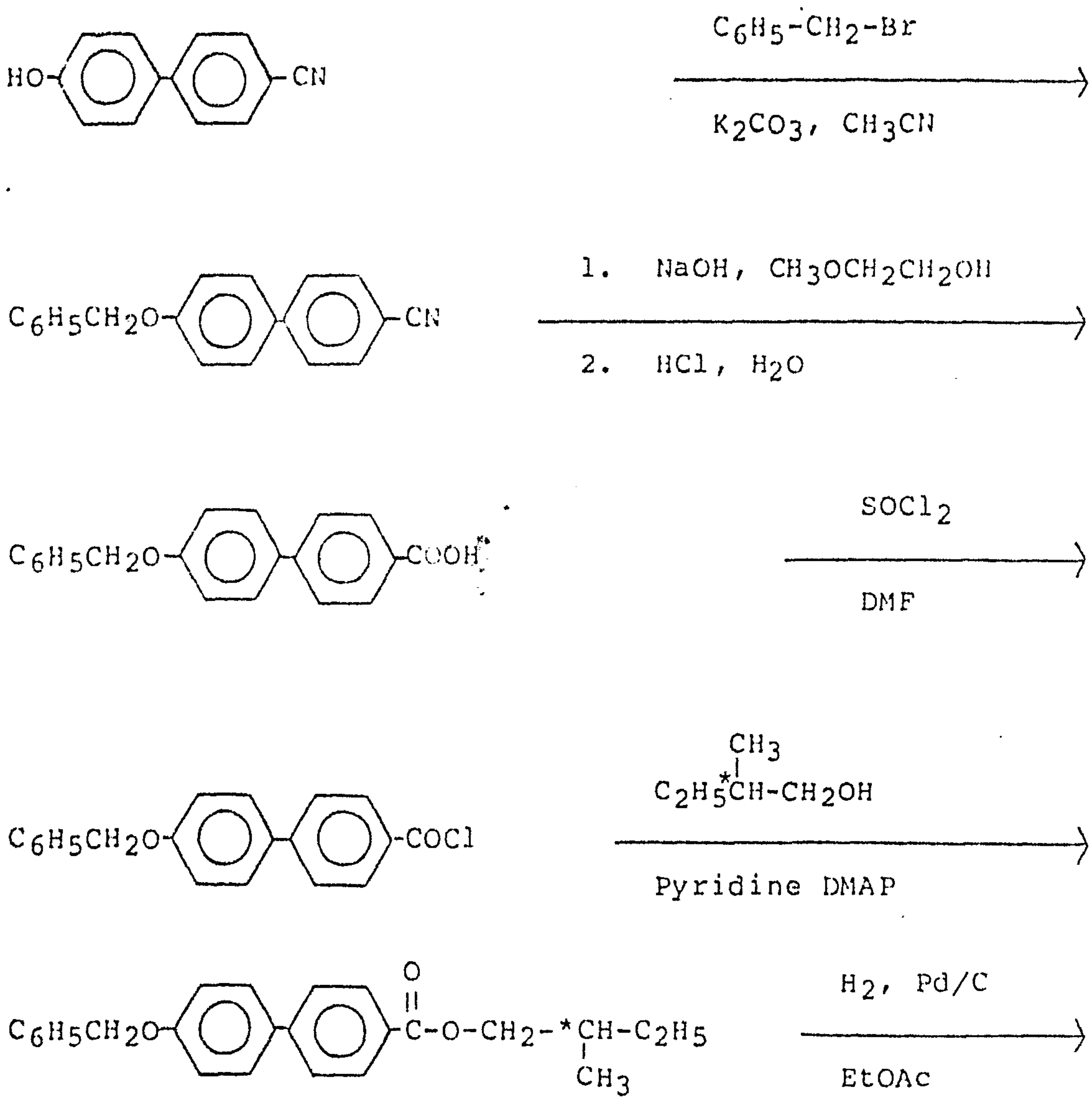

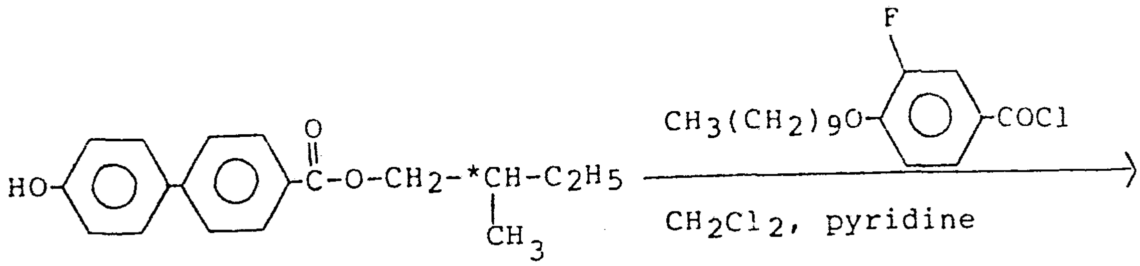


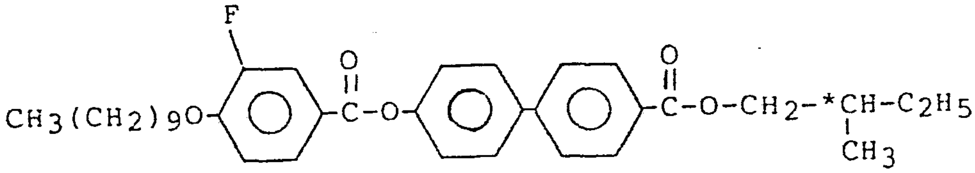

(XLVI)

PART A-- Preparation of 4-benzyloxy-4'-biphenyl carbonitrile. In a 250-ml, three-necked, round-bottom flask equipped with a magnetic stirrer, heating mantle, thermometer, and condenser were placed 1.76 g. (9.0 mmol) 4-hydroxy-4'-biphenylcarbonitrile, 3.94 g (28.5 mmol) powdered anhydrous potassium carbonate, 1.18 ml (9.92 mmol) α-bromotoluene, and 150 ml acetonitrile. After stirring the mixture under reflux for two hours, TLC analysis showed that none of the phenolic starting material remained. Two-thirds of the acetonitrile was then distilled off, and 200 ml dichloromethane was added. The mixture was filtered through Celite and the solids were washed thoroughly with dichloromethane. Evaporation of the filtrate yielded white crystals which were purified by recrystallization from methanol. 2.17 g (84.4%) of product was obtained; mp 150-151.5°C. The structure was confirmed by infrared, nuclear magnetic resonance, and mass spectral analyses.

PART B -- Preparation of 4-benzyloxy-4'-biphenylcarboxylic Acid. In a 250-ml, three-necked, round-bottom flask equipped with a magnetic stirrer, heating mantle, thermometer, and condenser were placed 1.59 g (5.57 mmol) 4-benzyloxy-4'-biphenylcarbonitrile, 15 g sodium hydroxide pellets, and 150 ml 2-methoxyethanol. The mixture was stirred under reflux overnight, then two-thirds of the 2-methoxyethanol was distilled off and 400 ml water was added. After acidification, the product was fiiltered, washed with water, and dried under vacuum to yield 1.69 g (100%) of 4-benzyloxy-4'-biphenylcarboxylic acid mp > 305°C, whose structure was confirmed by mass spectral analysis.

PART C -- Preparation of 4-benzyloxy-4'-biphenylcarbonyl chloride. In a 100-ml, three-necked, round-bottomed flask equipped with a magnetic stirrer, an oil bath, and a condenser topped with a drying tube were placed 1.69 g of 4-benzyloxy-4'-biphenylcarboxylic acid, 34 ml of thionyl chloride, and one drop of dimethylformamide. After stirring the solution for three hours under reflux, the thionyl chloride was distilled off, then 75 ml tetrachloromethane was added and distilled. The brown solid was dissolved in 500 ml hot dichloromethane, and the solution was treated with charcoal and filtered through Celite. The solids were washed with hot dichloromethane, and the filtrate was evaporated.

PART D -- Preparation of (S)-2-methyl-1-butyl 4-benzyloxy-4'-biphenylcarboxylate. In a 100-ml, three-necked, round-bottom flask equipped with a magnetic stirrer and thermometer were placed 3.2 g (36.3 mmol) (S)-(-)-2-methyl-1-butanol, 14 ml distilled pyridine, and a catalytic amount of 4-dimethylaminopyridine (DMAP). After cooling the flask to 0°C under nitrogen, 1.2 g (3.72 mmol) 4-benzyloxy-4'-biphenylcarbonyl chloride was

added and the mixture was stirred for three days at room temperature. It was then poured into 50 ml ice water and extracted with dichloromethane. The organic phase was extracted with 10% aqueous hydrochloric acid, dried over sodium sulfate, filtered, and evaporated to a light brown solid. Purification by flash chromatography on silica gel with dichloromethane followed by low-temperature recrystallization from pentane yielded white crystals (0.99 g, 71.2%, mp 95.5 - 97.5°C) whose structure was confirmed by infrared, nuclear magnetic resonance, and mass spectral anaylses.

PART E -- Preparation of (S)-2-methyl-1-butyl 4-hydroxy-4'-biphenylcarboxylate. In a 125 ml Parr bomb equipped with a magnetic stirrer were placed 960 mg (S)-2-methyl-1-butyl 4-benzyloxy-4'-biphenylcarboxylate, 200 mg 5% palladium on carbon, and 50 ml ethyl acetate. The bomb was purged with argon and pressurized with 500 psi hydrogen. After stirring at room temperature for one day, thin-layer-chromatographic analysis showed that considerable starting material remained. An additional 200 mg 5% palladium on carbon was carefully added, and the bomb was re-pressurized with 500 psi hydrogen. After stirring for one more day, TLC analysis showed that the reaction was complete. The reaction mixture was filtered through Celite and the solids were washed thoroughly with ethyl acetate. Evaporation of the solvent yielded white crystals which were recrystallized from hexanes at low temperature to yield 0.62 g (85%) of product, mp 111.5-113°C, whose structure was confirmed by infrared, nuclear magnetic resonance, and mass spectral anaylses.

PART F -- Preparation of 4-[(S)-2-methyl-1-butoxycarbonyl]-4'-biphenyl 3-fluoro-4-decyloxybenzoate. In a 100-ml, three-necked, round-bottomed flask equipped with a magnetic stirrer and an addition funnel were added 100 mg (0.35 mmol) (S)-2-methyl-1-butyl 4-hydroxy-4'-biphenylcarboxylate, 30 ml dichloromethane (dried over 4A molecular sieves), and 2.8 ml distilled pyridine. While this solution was stirred at -10°C under nitrogen, a solution of 184 mg (0.58 mmol) 3-fluoro-4-decyloxybenzoyl chloride in five ml dichloromethane was added dropwise, then the acid chloride was rinsed in with an additional five ml dichloromethane. After stirring for three days at room temperature, the solution was extracted with 10% aqueous hydrochloric acid, dried over sodium sulfate, filtered, and evaporated to a white solid. Purification by flash chromatography on silica gel with dichloromethane followed by low-temperature recrystallization from pentane yielded white crystals (46 mg, 23%). The structure was confirmed by infrared, nuclear magnetic resonance, and mass spectral analyses.

EXAMPLE 8

This example illustrates the preparation of 4-[(S)-2-methyl-1-butoxycarbonyl]-4'-biphenyl 3-fluoro-4-[2-(2-ethoxyethoxy)ethoxy]-benzoate.

PART A -- Preparation of methyl 3-fluoro-4-[2-(2-ethoxyethoxy)-ethoxy]-benzoate. Into a 500 ml, round-bottom flask equipped with a magnetic stirrer, heating mantle and condenser were placed 5.7 g. (33.5 mmol) methyl 3-fluoro-4-hydroxybenzoate, 8.5 g. (43.2 mmol) 1-bromo-2-(2-ethoxyethoxy)-ethane, 23.2 g. of powdered anhydrous potassium carbonate and 350 ml acetonitrile. After stirring the reaction mixture under reflux for four hours, TLC analysis showed that none of the phenolic starting material remained. Three hundred ml of the acetonitrile was then distilled off and 300 ml dichloromethane was added. The reaction mixture was filtered through Celite and the solids were washed thoroughly with dichloromethane. Evaporation of the filtrate yielded product in the form of a yellow oil. Purification by flash chromatography on silica gel with 4% diethyl ether

in dichloromethane, followed by low temperature recrystallization from pentane, yielded 8.55 g. (89%) of white crystals (m.p., 33-36.5°C). The structure was confirmed by infrared, nuclear magnetic resonance and mass spectral analyses.

PART B -- Preparation of 3-fluoro-4-[2-(2-ethoxyethoxy)-ethoxy-benzoic acid. Into a 500-ml, round-bottom flask equipped with magnetic stirrer, heating mantle and condenser were placed 3.15 g of the benzoate ester product prepared as described in PART A of this example, 6 mls of 50% aqueous sodium hydroxide solution and 150 mls of methanol. The reaction mixture was stirred under reflux for three hours. Methanol was distilled off (100 mls) and water (600 mls) was added. The reaction mixture was acidified with hydrochloric acid. After cooling to 0°C, a white solid precipitate was obtained. The white solid was filtered and set aside. The filtrate was extracted with dichloromethane and the extracted material was evaporated to a white solid which was combined with the set-aside material. The combined material was dried under vacuum to yield 2.82 g of product (94% yield) having a melting point of 67-68°C. The structure was confirmed by TLC, NMR, IR and mass spectral analyses.

PART C -- Preparation of (S)-2-methyl-1-butyl 4-hydroxy-4'-biphenylcarboxylate. Using the method described in PARTS A through E of EXAMPLE 7, there was prepared the reactant (S)-2-methyl-1-butyl-4-hydroxy-4'-biphenylcarboxylate, which was used in the esterification described in PART D of this example.

PART D -- Preparation of 4-[(S)-2-methyl-1-butoxycarbonyl]-4'-biphenyl 3 fluoro-4-[2-(2-ethoxyethoxy)-ethoxy]-benzoate. Into a 250 ml, round-bottom flask equipped with a magnetic stirrer, were placed 2.82

(10.36 mmol) of 3-fluoro-4-[2-(ethoxyethoxy)-ethoxy]-benzoic acid and 2.8 g (9.8 mmol) of the phenolic reactant, (S)-2-methyl-1-butyl 4-hydroxy-4'-biphenylcarboxylate, obtained respectively in the manners described in PARTS B and C of this example, 0.63 g (5.16 mmol) of catalyst 4-dimethylaminopyridine, and 2.8 g (14.61 mmol) of 1-(3-dimethylaminopropyl)-3-ethylcarbodiimide hydrochloride. The solids were washed in 90 mls of dichloromethane (dried over 5A molecular sieves). The reaction mixture was stirred at room temperature for 65 hours. Thin layer chromatographic analysis of the reaction mixture showed no phenolic reactant present. Flash chromatography was performed and fractions of desired product were combined and evaporated to provide a yellow oil containing crystalline material. The product was recrystallized from pentane with cooling in dry ice to yield 3.73 g (71% yield) of product having a melting point of 75.5-77°C and the following structure confirmed by NMR and mass spectral analyses.

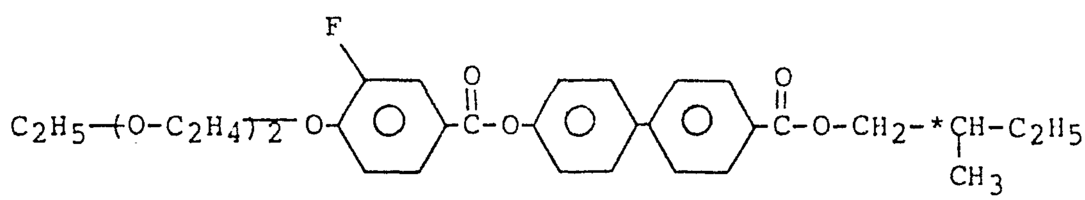

EXAMPLE 9

The liquid crystal compounds of Examples 1 to 8 were subjected to phase transition temperature measurement and observation. Evaluation of the liquid crystal compounds for the presence of a smectic phase was performed by differential scanning calorimetry and by microscopic observation. Measurements were obtained by

recording the temperature range of Sc* phase as each sample was cooled from its isotropic state. The ranges of temperature over which a smectic phase was detected is reported for each of the compounds in TABLE 1. The temperature difference for each range is reported as $\Delta$ T. The observed phase transitions are reported in TABLE 2.

Spontaneous polarization measurements, where obtained, are reported in TABLE 1. The measurements were obtained by preparing a ferroelectric cell containing the test compound. In each case, a ferroelectric cell was formed by scribing a pair of lines onto one of a pair of indium/tin oxide-coated glass substrates, spin coating each of the electrode glass plate elements with a layer of Nylon 66 polyamide; rubbing each of the polyamide layers; pairing the electrode plate elements (spaced apart about 2.4 to 5 microns by a peripheral edge spacer with the rubbed orientations being in parallel); and filling the cell with the sample liquid crystal material. Measurement of charge over the known area defined by the scribed lines was performed using a capacitive bridge circuit according to known technique. Measurements of Ps were performed within the smetic C temperature ranges shown in Table 1.

TABLE 1

| Liquid Crystal Compound of Example | Formula | Temperature (T) Range of Sc Phase (°C) | ΔT (°C) | Ps ($nC/cm^2$) |
|---|---|---|---|---|
| 1 | XXV | 35 - 42 | 7 | 12.5 |
| 2 | XXVI | 33 - 44 | 11 | 12.8 |
| 3 | XXXIII | 67 - 138 | 69 | 75.6 |
| 4 | XXXIV | 81 - 137 | 56 | 100.0 |
| 5 | XXXVIII | 103 - 145 | 42 | 78.0 |
| 6 | XL | 90 - 107 | 17 | -- |
| 7 | XLVI | 52 - 78 | 26 | 40.0 |
| 8 | LII | 24 - 72 | 48 | 8.0 |

In the phase transitions reported in TABLE 2, K represents crystalline; S represents smectic; Sc represents smectic C; I represents isotropic; and Ch represents cholesteric.

TABLE 2

| Liquid Crystal Compound of: Example | Formula | Phase Transitions (in °C) |
|---|---|---|
| 1 | XXV | $K \xrightarrow{45} S_C \xrightarrow{51} I$ |
| | | $K \xleftarrow{34.5} S_C \xleftarrow{42.3} I$ |
| 2 | XXVI | $K \xrightarrow{38.1} S_C \xrightarrow{49} S_A \xrightarrow{51.5} I$ |
| | | $K \xleftarrow{33} S_C \xleftarrow{44} S_A \xleftarrow{46} I$ |
| 3 | XXXIII | $K \xrightarrow{95} S_C \xrightarrow{140} Ch \xrightarrow{158} I$ |
| | | $K \xleftarrow{67} S_C \xleftarrow{138} Ch \xleftarrow{157} I$ |

| | | |
|---|---|---|
| 4 | XXXIV | K $\xrightarrow{101}$ $S_C$ $\xrightarrow{138}$ Ch $\xrightarrow{146}$ I |
| | | K $\xleftarrow{81}$ $S_C$ $\xleftarrow{137}$ Ch $\xleftarrow{145}$ I |
| 5 | XXXVIII | K $\xrightarrow{116.6}$ $S_C$ $\xrightarrow{147.1}$ Ch $\xrightarrow{162.5}$ I |
| | | K $\xleftarrow{103}$ $S_C$ $\xleftarrow{145}$ Ch $\xleftarrow{161}$ I |
| 6 | XXXX | K $\xrightarrow{97}$ $S_C$ $\xrightarrow{109}$ Ch $\xrightarrow{115}$ I |
| | | K $\xleftarrow{90}$ $S_C$ $\xleftarrow{107}$ Ch $\xleftarrow{113}$ I |
| 7 | XXXXVI | K $\xrightarrow{85}$ $S_C$ $\xrightarrow{120}$ $S_A$ $\xrightarrow{153}$ I |
| | | K $\xleftarrow{52}$ $S_C$ $\xleftarrow{78}$ $S_A$ $\xleftarrow{152}$ I |
| 8 | LII | K $\xrightarrow{75}$ $S_A$ $\xrightarrow{87}$ Ch $\xrightarrow{96}$ I |
| | | K $\xleftarrow{24}$ $S_C$ $\xleftarrow{72}$ $S_A$ $\xleftarrow{86}$ Ch $\xleftarrow{94}$ I |

## COMPARATIVE EXAMPLE 1

For purposes of comparison, a liquid crystal compound having the following formula was prepared

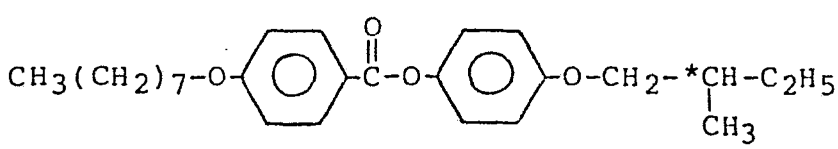

(LIII)

The compound of formula (LIII) has a hydrogen atom in place of the fluoro atom on the compound of Example 1. A range of smectic C* phase of 17°C (from 25 to 42°) was observed in the case of the formula (LIII) compound. Measurement of spontaneous polarization (using the method aforedescribed) provided values of 1.3 to 2.8 $nC/cm^2$ at temperatures of 41°C and 30°C (to be compared with the reported values of about 1.5 $nC/cm^2$ and about 1.0 $nC/cm^2$, respectively, for the corresponding $C_9$ and $C_{10}$ compounds reported by M.V. Loseva, et al., in Sov. Phys. Solid State 22 (3), March 1980). Measured and reported spontaneous polarization values for the non-fluorinated compounds are appreciably lower than the 12.8 $nC/cm^2$ measurement obtained from the compound of Example 1.

COMPARATIVE EXAMPLES 2 AND 3

Compounds corresponding, respectively, to the compounds of Examples 3 and 6, but having hydrogen in place of the fluorine thereof, were prepared for comparison with the compounds of Examples 3 and 6. A smectic C phase was not detectable in the case of either of the comparative compounds.

EXAMPLE 10

A liquid crystal composition showing a smectic C* phase over a range of from 19° to 41°C was prepared by admixing the following Compounds (A to C) corresponding to the formula and TABLE 3:

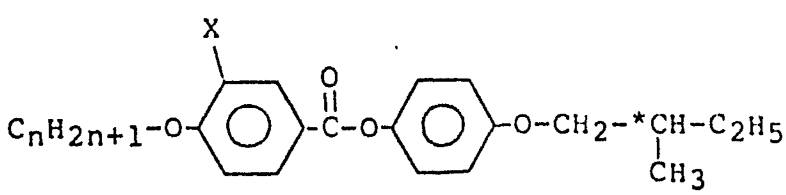

TABLE 3

| Compound | n | X | Mole % |
|---|---|---|---|
| A | 8 | H | 66 |
| B | 10 | F | 17 |
| C | 12 | F | 17 |

Spontaneous polarization was measured using the aforedescribed technique. A value of 2.5 $nC/cm^2$ was obtained at a temperature of 30°C.

7331 - 3920-X-13.699

C L A I M S

1. A smectic liquid crystal compound having the formula

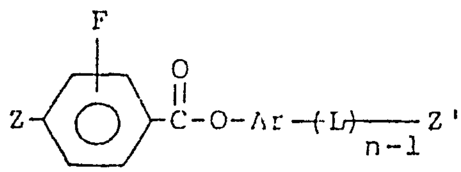

wherein Ar is p -phenylene or p,p´-biphenylene; L is a linkinig group selected from $-CH_2-$, -O-, $-\overset{O}{\overset{\|}{C}}-O-$ or $-O-\overset{O}{\overset{\|}{C}}-$; n is an integer one or two; each of Z and Z´is alkyl, alkoxy, alkoxyalkyl or an optically active group containing an asymmetric center; at least one of Z and Z´ being said optically active group containing an asymmetric center.

2. The smectic liquid crystal compound of claim 1 wherein -L- is -O- and n is two.

3. The smectic liquid crystal compound of claims 1 or 2 wherein Z is n-alkoxy of from 8 to 20 carbon atoms.

4. The smectic liquid crystal compound of anyone of claims 1-3 wherein Z´is an optically active group having the formula

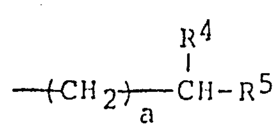

wherein a is zero or an integer from 1 to 8 and each of $R^4$ and

$R^5$ is alkyl, halogen, alkoxy or alkoxyalkyl provided that $R^4$ and $R^5$ are different from each other.

5. The smectic liquid crystal compound of claim 4 wherein a is one, $R^4$ is mehtyl and $R^5$ is ethyl.

6. The smectic liquid crystal compound of anyone of claims 1 to 5 wherein said fluoro substituent is positioned ortho with respect to said Z-moiety.

7. The smectic liquid crystal compound of anyone of claims 1 to 6 wherein Ar is p-phenylene or p,p′-biphenylene.

8. The smectic liquid crystal compound of anyone of claims 1 to 7 wherein Z is n-octyloxy, n-decyloxy or n-dodecyloxy.

9. The smectic liquid crystal compound of anyone of claims 1 to 8 wherein Z is an iptically active group containing an asymmetric center and Z′is alkyl.

10. The smectic liquid crystal compound of anyone of claims 1 to 9 wherein Z is an optically active group having the formula -OR* wherein R* has the formula

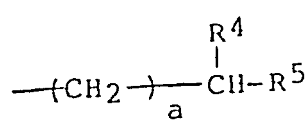

wherein a is zero or an integer from 1 to 8 and each of $R^4$ and $R^5$ is alkyl, halogen, alkoxy or alkoxyalkyl, provided that $R^4$ and $R^5$ are different from each other.

11. The smectic liquid crystal compound of anyone of claims 1 to 10 wherein a is one, $R^4$ is methyl and $R^5$ is ethyl.

12. The smectic liquid crystal compound of anyone of claims 1 to

9 wherein Z′is n-octyl.

13. The smectic liquid crystal compound of anyone of claims 1 to 12 wherein -L-is $-\overset{O}{\overset{\|}{C}}-O-$ and n is two.

14. The smectic liquid crystal compound of claim 1 wherein Z is alkyl of from 8 to 20 carbon atoms.

15. A smectic liquid crystal composition containing as a component a smectic liquid crystal compound of the formula

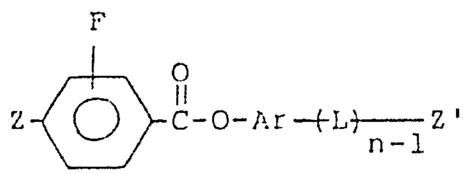

wherein Ar is p-phenylene or p,p′-biphenylene; L is a linkinig group selected from $-CH_2-$, -O-, $-\overset{O}{\overset{\|}{C}}-O-$ or $-O-\overset{O}{\overset{\|}{C}}-$; n is an integer one or two; each of Z and Z′is alkyl, alkoxy, alkoxyalkyl or an opticallv active group containing an asymmetric center; at least one of Z and Z′ being said optically active group containing an asymmetric center.

16. The liquid crystal composition of claim 15 wherein Z′is an optically active group having the formula

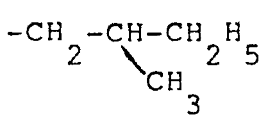

17. The liquid crystal composition of claims 15 or 16 wherein fluoro substituent is positioned ortho with respect

to said Z-moiety.

18. The liquid crystal composition of anyone of claims 15 to 17 wherein Z- is n-decyloxy or n-dodecyloxy.